# EUROPEAN PATENT APPLICATION

(11) **EP 4 701 241 A1**
(43) Date of publication of application: **25.02.2026**
(21) Application number: 23933435.2
(22) Date of filing: 19.04.2023
(51) Int. Cl.: H04W 4/50

(54) **COMMUNICATION METHOD, AND DEVICE**

(71) Applicant: GUANGDONG OPPO MOBILE TELECOMMUNICATIONS CORP., LTD., Dongguan, Guangdong 523860 (CN)
(72) Inventor: GUO, Boren, Dongguan, Guangdong 523860 (CN); WANG, Yaxin, Dongguan, Guangdong 523860 (CN)
(74) Representative: Mewburn Ellis LLP
(86) International application number: PCT/CN2023/089353
(87) International publication number: WO 2024/216558

(57) **Abstract**

This disclosure relates to a communication method, device, computer-readable storage medium, computer program product, and computer program. The method includes the following. A first network device receives a first message, the first message carries information of a first sensing task; the first network device sends a second message, the second message carries information of each of one or more electronic devices within a target sensing area, the target sensing area is related to the first sensing task.

## Description

### TECHNICAL FIELD

This disclosure relates to the field of communication, in particular to a communication method, device, computer-readable storage medium, computer program product, and computer program.

### BACKGROUND

In the related art, communication networks such as cellular networks are used solely for communication. However, wireless electromagnetic wave signals used in cellular networks not only enable wireless data transmission and communication but also possess environmental sensing capability, such as recognizing user actions or gestures, monitoring breathing, measuring terminal movement speed, environmental imaging, and weather monitoring. Therefore, future cellular networks may not only serve communication and data transmission purposes but can also acquire sensing information. Nevertheless, in scenarios where communication and sensing are integrated, when a certain sensing task senses a target object or region, other electronic devices may be affected, potentially leading to privacy leakage for these affected devices. Thus, in such scenarios, identifying the electronic devices affected by the sensing task and ensuring their privacy and security becomes a critical issue to be addressed.

### SUMMARY

Embodiments of the disclosure provide a communication method, device, computer-readable storage medium, computer program product, and computer program.

An embodiment of the disclosure provides a communication method, which includes the following. A first network device receives a first message, where the first message carries information of a first sensing task. The first network device sends a second message, where the second message carries information of each of one or more electronic devices within a target sensing area, and the target sensing area is associated with the first sensing task.

Another embodiment of the disclosure provides a communication method, which includes the following. A second network device receives a second message, where the second message carries information of each of one or more electronic devices within a target sensing area, and the target sensing area is associated with a first sensing task.

Yet another embodiment of the disclosure provides a communication method, which includes the following. A second network device sends a fifth message to a third device, where the fifth message requests the third device to authorize a first sensing task; the second network device receives a response message for the fifth message from the third device, where the response message for the fifth message indicates whether the third device authorizes the first sensing task.

A further embodiment of the disclosure provides a communication method, which includes the following. A third device receives a fifth message sent by a second network device, where the fifth message requests the third device to authorize a first sensing task. The third device sends a response message for the fifth message to the second network device, where the response message for the fifth message indicates whether the third device authorizes the first sensing task.

An embodiment of the disclosure provides a first network device, which includes a first communication unit. The first communication unit is configured to receive a first message carrying information of a first sensing task, and send a second message, where the second message carries information of each of one or more electronic devices within a target sensing area associated with the first sensing task.

Another embodiment of the disclosure provides a second network device, which includes a second communication unit. The second communication unit is configured to receive a second message, where the second message carries information of each of one or more electronic devices within a target sensing area associated with a first sensing task.

Yet another embodiment of the disclosure provides a second network device, which includes a second communication unit. The second communication unit is configured to send a fifth message to a third device to request the third device to authorize a first sensing task, and receive a response message for the fifth message from the third device. Where the response message for the fifth message indicates whether the first sensing task is authorized.

A further embodiment of the disclosure provides a third device, which includes a third communication unit. The third communication unit is configured to receive a fifth message from a second network device, where the fifth message is used to request the third device to authorize a first sensing task. The third communication unit is configured to send a response message for the fifth message, where the response message for the fifth message indicates whether the first sensing task is authorized by the third device.

An embodiment of the disclosure provides a first network device, which includes a processor and a memory. The memory is configured to store a computer program, and the processor is configured to invoke and execute the computer program stored in the memory to cause the first network device to perform the aforementioned method.

An embodiment of the disclosure provides a second network device, including a processor and a memory. The memory is configured to store a computer program, and the processor is configured to invoke and execute the computer program stored in the memory to cause the second network device to perform the aforementioned method.

An embodiment of the disclosure provides a third device, including a processor and a memory. The memory is configured to store a computer program, and the processor is configured to invoke and execute the computer program stored in the memory to cause the third device to perform the aforementioned method.

An embodiment of the disclosure provides a chip for implementing the aforementioned methods.

Specifically, the chip includes a processor configured to invoke and execute a computer program from a memory, enabling a device equipped with the chip to perform the aforementioned methods.

An embodiment of the disclosure provides a computer-readable storage medium for storing a computer program. When the computer program is executed by a device, causes the device to perform the aforementioned methods.

An embodiment of the disclosure provides a computer program product, including computer program instructions that cause a computer to perform the aforementioned methods.

An embodiment of the disclosure provides a computer program which, when executed on a computer, causes the computer to perform the aforementioned methods.

By adopting the solutions provided in the embodiments of the disclosure, electronic devices within a target sensing area can be identified. Since the target sensing area is associated with the first sensing task, identifying the electronic devices within the target sensing area also identifies the electronic devices affected by the sensing task. This avoids the problem in the related art where only the target sensing object specified by the sensing task is identified for authorization, while failing to protect the privacy of other electronic devices affected by the sensing task, thereby ensuring the privacy and security of all affected electronic devices within the target sensing area.

### BRIEF DESCRIPTION OF THE DRAWINGS

FIG. 1 is a schematic diagram of an application scenario according to an embodiment of the disclosure.
FIG. 2 is a schematic diagram of a 5G core (5GC) system.
FIG. 3 is a schematic flowchart of a sensing processing method.
FIG. 4 is a schematic flowchart of a communication method according to an embodiment of the disclosure.
FIG. 5 is a schematic flowchart of a communication method according to another embodiment of the disclosure.
FIGS. 6-10 are exemplary flowcharts illustrating various processing flows in the communication method according to embodiments of the disclosure.
FIG. 11 is a schematic flowchart of yet another communication method according to an embodiment of the disclosure.
FIG. 12 is a schematic flowchart of still another communication method according to an embodiment of the disclosure.
FIG. 13 is a schematic block diagram of a first network device according to an embodiment of the disclosure.
FIG. 14 is a schematic block diagram of another first network device according to an embodiment of the disclosure.
FIG. 15 is a schematic block diagram of a second network device according to an embodiment of the disclosure.
FIG. 16 is a schematic block diagram of another second network device according to an embodiment of the disclosure.
FIG. 17 is a schematic block diagram of a third device according to an embodiment of the disclosure.
FIG. 18 is a schematic block diagram of a communication device according to an embodiment of the disclosure.
FIG. 19 is a schematic block diagram of a chip according to an embodiment of the disclosure.
FIG. 20 is a schematic block diagram of a communication system according to an embodiment of the disclosure.

### DETAILED DESCRIPTION

Below, technical solutions of the embodiments of the disclosure will be described in conjunction with the accompanying drawings of the embodiments of the disclosure.

The technical solution of the disclosure can be applied to various communication systems, such as: global system of mobile communication (GSM) system, code division multiple access (CDMA) system, wideband code division multiple access (WCDMA) system, general packet radio service (GPRS), long term evolution (LTE) system, advanced long term evolution (LTE-A) system, new radio (NR) system, NR system evolution system, non-terrestrial networks (NTN) system, universal mobile telecommunication system (UMTS), wireless local area networks (WLAN), wireless fidelity (WiFi), 5th-Generation (5G) system or other communication systems.

Generally speaking, traditional communication systems support a limited number of connections and are easy to implement. However, with the development of communication technology, mobile communication systems will not only support traditional communication but also support, for example, device to device (D2D) communication, machine to machine (M2M) communication, machine type communication (MTC), vehicle to vehicle (V2V) communication, or vehicle to everything (V2X) communication. The embodiments of the disclosure can also be applied to these communication systems. In one possible implementation, the communication system of the disclosure can be applied to a carrier aggregation (CA) scenario, can also be applied to a dual connectivity (DC) scenario, and can also be applied to a Standalone (SA) networking scenario. In one possible implementation, the communication system of the disclosure can be applied to unlicensed spectrum, which can also be considered as shared spectrum; or, the communication system of the disclosure can also be applied to licensed spectrum, which can also be considered as non-shared spectrum.

The disclosure describes various embodiments in conjunction with network devices and terminal devices. The terminal device can also be referred to as a user equipment (UE), access terminal, user unit, user station, mobile station, mobile platform, remote station, remote terminal, mobile device, user terminal, wireless communication device, user agent, or user apparatus, etc. The terminal device can be a WLAN station (STA), can be a cellular phone, cordless phone, session initiation protocol (SIP) phone, wireless local loop (WLL) station, personal digital assistant (PDA) device, handheld device with wireless communication function, computing device or other processing device connected to a wireless modem, in-vehicle device, wearable device, next-generation communication system terminal device such as an NR network, or a terminal device in a future-evolved public land mobile network (PLMN) network, etc. In the embodiments of the disclosure, the terminal device can be deployed on land, including indoors or outdoors, handheld, wearable or in-vehicle; it can also be deployed on water (such as on a ship); it can also be deployed in the air (for example, on an airplane, balloon, or satellite, etc.). In the embodiments of the disclosure, the terminal device can be a mobile phone, tablet computer, computer with wireless transmit and receive functions, virtual reality (VR) terminal device, augmented reality (AR) terminal device, wireless terminal device in industrial control, wireless terminal device in self-driving, wireless terminal device in remote medical, wireless terminal device in smart grid, wireless terminal device in transportation safety, wireless terminal device in smart city, or wireless terminal device in smart home, etc. As an example and not a limitation, the terminal device in the embodiments of the disclosure can also be a wearable device. Wearable devices can also be referred to as wearable smart devices, which are a general term for devices that are developed by applying wearable technology to daily wearables and integrating them with intelligent design, such as glasses, gloves, watches, clothing, and shoes. Wearable devices are portable devices that are directly worn on the body or integrated into the user's clothing or accessories. Wearable devices are not only hardware devices but can also achieve powerful functions through software support, data interaction, and cloud interaction. Broadly speaking, wearable smart devices include those that have full functionality, large size, and can independently perform complete or partial functions without relying on smartphones, such as smartwatches or smart glasses, as well as those that focus on a specific application function and need to be used in conjunction with other devices such as smartphones, such as various smart bands and smart jewelry for monitoring physical signs.

In the embodiments of the disclosure, the network device can be a device used for communication with a mobile device. The network device can be an access point (AP) in a WLAN, a base transceiver station (BTS) in GSM or CDMA, a NodeB (NB) in WCDMA, an evolved Node B (eNB or eNodeB) in LTE, or a relay station or access point, or an in-vehicle device, wearable device, and a network device (gNB) in an NR network or a future-evolved PLMN network or NTN network, etc. As an example and not a limitation, in the embodiments of the disclosure, the network device can have mobility characteristics, for example, the network device can be a mobile device. Optionally, the network device can be a satellite, balloon station. For example, the satellite can be a low earth orbit (LEO) satellite, medium earth orbit (MEO) satellite, geostationary earth orbit (GEO) satellite, high elliptical orbit (HEO) satellite, etc. Optionally, the network device can also be a base station located on land or water. In the embodiments of the disclosure, the network device can provide services for a cell, and the terminal device communicates with the network device by using the transmission resources (for example, frequency domain resources, or spectrum resources) of the cell. The cell can be a cell corresponding to the network device (for example, a base station), and the cell can belong to a macro base station or a small cell base station. Here, the small cell can include: Metro cell, Micro cell, Pico cell, Femto cell, etc. These small cells have the characteristics of small coverage area and low transmission power, and are suitable for providing high-speed data transmission services.

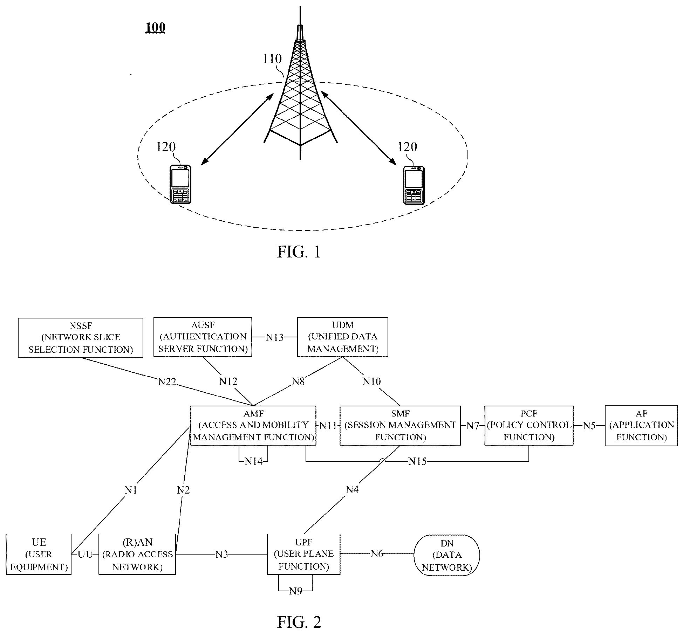

Figure 1 illustratively illustrates a communication system 100. The communication system includes a network device 110 and two terminal devices 120. In one possible implementation, the communication system 100 can include multiple network devices 110, and in the coverage area of each network device 110, there can be other number of terminal devices 120. The disclosure does not limit this. In one possible implementation, the communication system 100 can also include other network entities such as mobility management entity (MME), access and mobility management function (AMF), etc. The disclosure does not limit this. The network device can include access network devices and core network devices. That is, the wireless communication system also includes multiple core networks for communication with the access network devices. The access network device can be an evolved Node B (eNB or e-NodeB) macro base station, micro base station (also called "small base station"), pico base station, access point (AP), transmission point (TP), or new generation base station (new generation Node B, gNodeB) in a LTE system, NR system, or authorized auxiliary access long term evolution (LAA-LTE) system. It should be understood that the device with communication function in the network/system of the disclosure can be referred to as a communication device. Taking the communication system illustrated in Figure 1 as an example, the communication device can include a network device and a terminal device with communication functions, and the network device and the terminal device can be specific devices in the disclosure. The communication device can also include other devices in the communication system, such as network controllers, mobility management entities, etc. The disclosure does not limit this.

To facilitate understanding of the disclosure, a brief explanation of the basic process and basic concepts involved in the disclosure is provided below. It should be understood that the basic process and basic concepts introduced below do not limit the disclosure.

Figure 2 illustrates a 5G network system architecture diagram, which includes: network slice selection function (NSSF), mainly used for the management of network slice-related information, such as being responsible for selecting network slices for terminal devices; authentication server function ( AUSF), which is used to complete the user access identity authentication function; unified data management (UDM), which is used to manage and store subscription data and authentication data; AMF, used to complete mobility management, security anchor and security context management, etc. In addition to performing mobility management for UE, AMF is also responsible for forwarding session management-related messages between UE and session management function (SMF); SMF, used to complete session management, UE IP address allocation and management, etc.; Policy Control Function (PCF) is responsible for formulating policies related to UE mobility management, session management, billing, etc.; Application Function (AF), used for external application server; user plane function (UPF), used for complex user plane processing, such as forwarding traffic between the wireless access network and the Internet, reporting traffic usage, implementing quality of service (QoS) policies, etc. ; Data Network (DN) is the external data network of 5GC (such as the Internet).

In addition, between various nodes of the 5GC, between the UE and the 5GC nodes, between the UE and the wireless access network (RAN), and between the RAN and the 5GC nodes, data are transmitted through corresponding interfaces. For example, as illustrated in Figure 2: the AMF in the 5GC transmits data with the NSSF through the N22 interface; the AMF transmits data with the SMF through the N11 interface; the AMF transmits data with the AUSF through the N12 interface; the AMF transmits data with the UDM through the N8 interface. The SMF transmits data with the UPF through the N4 interface. The UPF transmits data with the external data network through the N6 interface and transmits data with the AN through the N3 interface. The UE performs access layer connection, interacts access layer messages, and transmits wireless data through the Uu interface with the AN, and performs non-access layer (NAS) connection with the AMF through the N1 interface. The RAN transmits data with the AMF through the N2 interface and transmits data with the UPF through the N3 interface. It should be understood that the above only explains some of the interfaces between the nodes, and the other interfaces between the other nodes in Figure 2 are not described one by one.

Cellular networks, including 5G networks, are used solely for communication. However, the wireless electromagnetic wave signals used by cellular networks can not only be used for wireless data transmission and communication but also have the ability to perceive the environment, such as recognizing users' actions or gestures, monitoring breathing, measuring terminal movement speed, environmental imaging, and weather monitoring. Therefore, in future cellular networks, it is possible to consider not only using them for communication and data transmission but also for obtaining sensing information. Currently, there is a discussion on supporting a sensing capability in BSG networks, and it is proposed to add a sensing function network element and corresponding procedures in the 3GPP network to support sensing functions. For example, when an application sends a sensing request for a target UE to the core network of the 3GPP network, the core network selects the correct access network device or an assistance UE through the sensing control network element or AMF, and triggers the capability of performing sensing-related wireless measurements. It starts the measurement of sensing information and generates sensing results, that is, it implements the integration of communication and sensing in the network. The main wireless sensing scenarios of the above-mentioned integration of communication and sensing are as follows: 1) Base station echo sensing link (single gNB sensing) : the base station sends sensing signals and receives echo signals; 2) Base station-to-base station sensing link (gNB-gNB sensing) : base station B receives sensing signals sent by base station A; 3) Uplink sensing link on the air interface (UE-gNB uplink sensing) : the base station receives sensing signals sent by the terminal; 4) Downlink sensing link on the air interface (UE-gNB downlink sensing) : the terminal receives sensing signals sent by the base station; 5) Terminal echo sensing link (single UE sensing) : the terminal sends sensing signals and receives echo signals; 6) Terminal-to-terminal sensing link (UE-UE sensing) : terminal B receives sensing signals sent by terminal A. In the early stage of the integration of communication and sensing in B5G, it is considered to try to reuse the existing air interface signals to perform sensing actions as much as possible, without introducing too many air interface enhancements; and considering the complexity of full-duplex implementation, collaboration sensing between the terminal and/or base station is a priority direction.

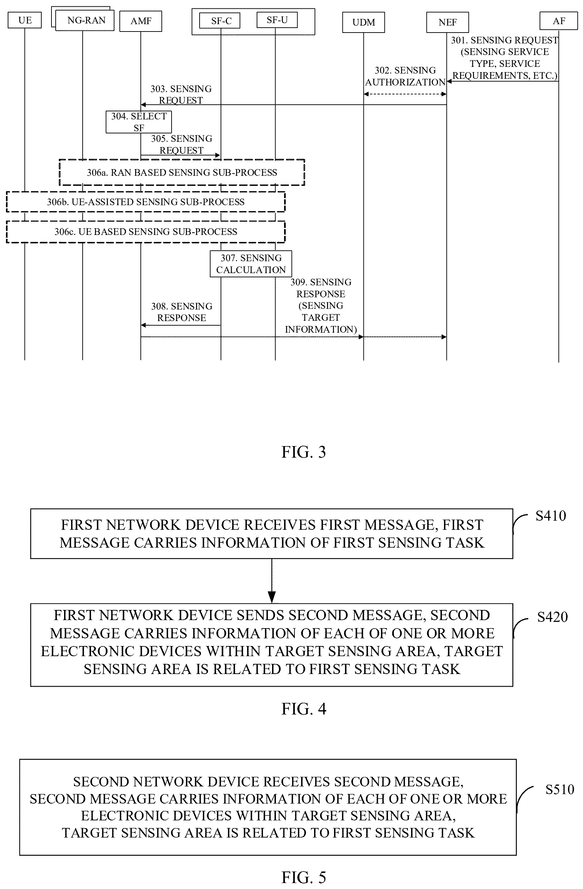

Figure 3 is a possible flowchart for controlling the access network device or UE to perform UE-level sensing operations, which includes the following. Steps 301 to 303, AF sends a sensing request to AMF through network exposure function (NEF), the sensing request may contain sensing service type, service requirements, etc.. In step 302, NEF performs sensing authorization for the service sensing request from the AF, the sensing authorization may be locally saved in NEF or UDM, NEF may request authorization verification from UDM. NEF obtains privacy check information from UDM and performs privacy checks. For example, if the UE (or target UE) does not allow a certain type of service to obtain sensing measurement data or sensing results related to itself, NEF will reject the sensing request. If the UE allows a certain type of service to obtain sensing measurement data or sensing results related to itself, NEF will route the sensing request to AMF according to the parameters of the sensing request. Step 304, AMF selects SF according to the sensing request. Step 305, AMF sends the sensing request to the SF network element, which may include SF-C (Control) and SF-U (User) as illustrated in Figure 3. Step 306, SF controls the base station or UE to perform the sensing measurement function according to the sensing request. The above step 306 may include one of the Step 306a to Step 306c. Step 306a, NG-RAN (and AMF and SF) performs a RAN based sensing sub-process. Step 306b, UE performs a UE-assisted sensing sub-process through NG-RAN (and AMF, SF). Step 306c, multiple UEs (NG-RAN, AMF and SF) perform a UE based sensing sub-process. Step 307, SF performs sensing calculation based on the sensing measurement data reported by the base station or UE. Steps 308 to 309, SF sends a sensing response to UDM and/or NEF through AMF, the sensing response carries sensing target information, and finally NEF and/or UDM open the sensing response to the AF function.

From the perspective of UE users, sensing measurement data or sensing results include environmental information around the UE, which is a relatively private type of data. Drawing on the location privacy check idea in Location Service (LCS), that is, if an application wants to obtain sensing measurement data or sensing results around the UE, the network needs to first confirm whether the user of the UE allows the application to obtain the above data. Therefore, in the above scheme, authorization of sensing measurement data is carried out in step 302.

In the above scheme, only the authorization certification of the target UE (that is, the UE affected by the sensing task) is carried out, and the privacy protection problem of non-target UEs has not been studied in detail. However, whether it is object-oriented sensing or area-oriented sensing, how to ensure the privacy of non-target UEs within the sensing range is a problem that future sensing tasks, especially high-precision sensing tasks, must solve. The primary problem of obtaining non-target UE sensing authorization is how the network can determine the non-target UEs that may be affected. In this regard, the related technology has not yet solved the problem of how to identify non-target UEs within the current sensing task range. In addition, the related technology only involves the authorization of a certain type of sensing service through UE subscription messages. However, the tolerance of UE for sensing tasks may be dynamically changing. For example, users' permissions for the same sensing task may be different in different places (indoor or outdoor) and at different times (daytime or late night). Therefore, direct confirm with users can obtain the most accurate authorization information. In addition, the authorization granularity of sensing tasks in subscription messages is not clear, and only involves authorization at the level of sensing service types. However, users' tolerance for different sensing precisions and resolutions of the same type of sensing task may be different. For example, users only allow low-resolution sensing. Moreover, users' trust in different initiators of sensing tasks is also different. For example, users only allow relatives or friends to perform a certain type of sensing task. Therefore, it is also necessary to introduce sensing authorization of finer-granularity to protect users' privacy.

It should be understood that the terms "system" and "network" are often used interchangeably in this text. The term "and/or" in this text is merely a description of the associative relationship between associated objects, indicating that there can be three relationships, for example, A and/or B can represent: the existence of A alone, the simultaneous existence of A and B, and the existence of B alone. In addition, the character "/" in this text generally indicates an "or" relationship between the associated objects before and after it. It should be understood that the term "indicate" mentioned in the embodiments of the disclosure can be a direct indication, an indirect indication, or an indication of an associative relationship. For example, A indicates B can mean that A directly indicates B, such as B can be obtained through A; it can also mean that A indirectly indicates B, such as B can be obtained through C when A indicates C; it can also mean that there is an associative relationship between A and B. In the description of the embodiments of the disclosure, the term "corresponding" can indicate a direct or indirect correspondence between the two, or it can indicate an associative relationship, or it can be an indication and being indicated, a configuration and being configured, etc.

To facilitate understanding of the technical solution of the disclosure, the related technology of the disclosure is described below. The following related technology can be combined with the technical solution of the disclosure in any way, and they are all within the scope of protection of the disclosure.

Figure 4 is a schematic flowchart of a communication method according to an embodiment of the disclosure. The method includes at least part of the following content.

S410, a first network device receives a first message, the first message carries information of a first sensing task.

S420, the first network device sends a second message, the second message carrying information of each of one or more electronic devices within a target sensing area, the target sensing area is related to the first sensing task.

Figure 5 is a schematic flowchart of a communication method according to another embodiment of the disclosure. The method includes at least part of the following content.

S510, a second network device receives a second message, the second message carries information of each of one or more electronic devices within a target sensing area, the target sensing area is related to a first sensing task.

Here, the first network device is a first core network device or a second access network device. The second network device is a second core network device with a sensing capability. The second core network device with a sensing capability can be at least one of the following: SF network element, SF-C, SF-U, location management function (LMF), gateway mobile location center (GMLC), etc. It should be understood that the above is only an exemplary illustration, and in actual processing, the second core network device with the sensing capability is not limited to the network elements listed above, and can also include NEF and/or SMF, etc. Here, all possible network elements of the second core network device with a sensing capability are not exhaustively enumerated.

In some possible implementations, the first network device receiving a first message includes: the first network device receiving a first message sent by a first device. The first message carries a sensing request, the sensing request carries information of the first sensing task, the first device is the initiator of the first sensing task. The first network device sending a second message includes: the first network device sending the second message to the second network device. Correspondingly, the second network device receiving the second message includes: the second network device receiving the second message sent by the first network device.

In this implementation, the first network device can be a first core network device; the second network device can be a second core network device with a sensing capability; the aforementioned first device can be one of the following: a first terminal device, a first access network device, a first server, a third core network device. The first core network device can refer to AMF, or it can be any other core network device that can implement the solution provided in this embodiment, and all possibilities are within the scope of protection of this embodiment. The first device can be the device that initiates the sensing, that is, the device that initiates the sensing request. The first terminal device can be the terminal device that initiates the sensing. The first access network device can be an access network device that initiates the sensing. The first server can be the server that initiates the sensing, and the server can be an AF network element or any other network element with service functions, without limitation here. The third core network device can be the core network device that initiates the sensing, and it should be understood that any core network device with the capability to initiate sensing is within the scope of protection of this embodiment, and all possible core network devices that initiate sensing are not limited here.

In this implementation, the first message carrying the sensing request can refer to that the first message is the sensing request, or it can refer to that the first message carries the sensing request and other content, without limitation on all possible content that the first message or sensing request may carry. The sensing request can at least carry information of the first sensing task, which is the sensing task initiated by the first device this time. It should be understood that, in addition to carrying information of the first sensing task, the sensing request can also carry other information of the first sensing task, and all possibilities are not exhausted in this implementation. Optionally, the first message sent by the first device to the first network device can be directly referred to as a sensing request, and all the content in the sensing request can be referred to as the content of the original sensing request.

The second message carries information of each of one or more electronic devices within the target sensing area. Here, the information of each electronic device can refer to the network identifier and/or ID of each electronic device. For example, the ID can include but is not limited to at least one of the following: subscription permanent identifier (SUPI), subscription concealed identifier (SUCI), permanent equipment identifier (PEI), 5G globally unique temporary identifier (5G-GUTI), internal-group identifier (IGI), generic public subscription identifier (GPSI), etc. Another example is that the aforementioned network identifier can include: internet protocol address (IP address), media access control (MAC) address, etc. It should be noted that, for the sake of simplicity, the ID of the electronic device is used as an example of the information of the electronic device in the following text, which does not mean that the information of the electronic device can only be the device's ID. That is, the ID in the following text can be replaced by the network identifier (IP address and/or MAC address), or the ID in the following text can be replaced by the ID and the network identifier (IP address and/or MAC address), without listing them one by one. In an exemplary embodiment, the aforementioned electronic device can be a terminal device.

The information of each electronic device within the target sensing area can be a list of IDs of electronic devices affected by the first sensing task within the target sensing area, for example, it can be represented as an affected UE ID list. Unless otherwise specified in the following text, the affected UE ID list and the list of IDs of electronic devices affected by the first sensing task within the target sensing area have the same meaning, and will not be repeated.

Optionally, the second message can also carry a sensing request.

For example, the sensing request in the second message can carry information of each of one or more electronic devices within the target sensing area, that is, the second message can also be referred to as a sensing request sent by the first network device to the second network device, which includes not only the content of the original sensing request but also information of each of one or more electronic devices within the target sensing area. That is, the sensing request sent by the first network device to the second network device includes two information elements: the content of the original sensing request and information of each of one or more electronic devices within the target sensing area. For example, the second message can carry the sensing request and information of each of one or more electronic devices within the target sensing area separately, that is, the second message can carry the sensing request and information of each of one or more electronic devices within the target sensing area as two different information elements in the second message. That is to say, in the process of forwarding the sensing request (carried by the first message) initiated by the first device from the first network device to the second network device, the first network device obtains information of each of one or more electronic devices within the target sensing area; then the first network device sends the information of each of one or more electronic devices within the target sensing area along with the sensing request (that is, both the information of each of one or more electronic devices within the target sensing area and the sensing request are carried in the second message) to the second network device.

Before the first network device sends the second message, the method can further include: the first network device determines the one or more electronic devices within the target sensing area based on the information of the first sensing task.

In one possible example, the first sensing task is an object-oriented sensing task. The information of the first sensing task includes information of a target sensing object of the first sensing task; the electronic device is different from the target sensing object. In this case, the aforementioned one or more electronic devices within the target sensing area can refer to one or more electronic devices within the target sensing area that are different from the target sensing object. Optionally, the one or more electronic devices within the target sensing area that are different from the target sensing object can refer to: one or more electronic devices within the target sensing area, different from the target sensing object, and affected by the first sensing task.

Optionally, the first network device determining the one or more electronic devices within the target sensing area based on the information of the first sensing task includes: the first network device determining a second location of the target sensing object based on the information of the target sensing object; the first network device determining a target sensing area of each of one or more granularities corresponding to the target sensing object, based on the second location of the target sensing object; the first network device determining one or more electronic devices different from the target sensing object from one or more candidate devices within each target sensing area of each granularity.

The information of the target sensing object includes at least one of the following: ID information of the target sensing object, a first location of the target sensing object.

Exemplarily, the information of the target sensing object includes ID information of the target sensing object.

The target sensing object can be a target terminal, which can be a target UE. The identity information can be a network identifier and/or ID, and the explanation of the ID and network identifier is the same as the previous embodiment, and will not be repeated.

The first network device determining the second location of the target sensing object based on the information of the target sensing object can be: the first network device determining the second location of the target sensing object based on the local storage of UE contexts of all UEs and the identity information of the target sensing object. Exemplarily, the second location can be one of a cell, sector, TA, or geographical coordinates represented by latitude and longitude, and will not be exhausted here.

The one or more granularities include at least one of the following: registration area (RA), tracking area (TA), cell, sector, specified radius. The aforementioned sector can refer to the geographical area covered by the antenna of an access network device, and one access network device can cover one or more sectors; a cell can be a logical concept under a sector, and one sector can correspond to one or more cells.

The first network device determining a target sensing area of each of one or more granularities corresponding to the target sensing object based on the second location of the target sensing object can include: the first network device determining at least one of the following corresponding to the target sensing object based on the second location of the target sensing object: a target sensing area under RA, a target sensing area under TA, a target sensing area under a cell, a target sensing area under a sector, and a target sensing area under a specified radius. The target sensing area under RA can be a target sensing area with RA as the granularity (or dimension), that is, the target sensing area specifically is a target RA; the target sensing area under TA can refer to a target sensing area with TA as the granularity (or dimension), that is, the target sensing area can be a target TA; the target sensing area under a cell can be a target sensing area with a cell as the granularity (or dimension), that is, the target sensing area specifically is a target cell; the target sensing area under a sector can be a target sensing area with a sector as the granularity (or dimension), that is, the target sensing area specifically is a target sector; the target sensing area under a specified radius can be a target sensing area with the specified radius as the granularity (or dimension), that is, the target sensing area specifically is a target area within a specified radius centered on the target sensing object.

The first network device determining one or more electronic devices different from the target sensing object from one or more candidate devices within each target sensing area of each granularity can include the following. The first network device determines one or more candidate devices within each target sensing area of each granularity based on the location information of each electronic device among all electronic devices. Then the first network device determines one or more electronic devices different from the target sensing object, from one or more candidate devices within each target sensing area of each granularity. Any electronic device different from the target sensing object can refer to any electronic device with identity information different from that of the target sensing object. The location information of each electronic device can refer to at least one of the following: the registration area identifier of the electronic device, the tracking area identity (TAI) of the last (or most recent) registration of the electronic device, the ID of the cell where the electronic device is located, where the TAI of the last (or most recent) registration of the electronic device can be represented as "TAI of last Registration". In some possible examples, any electronic device different from the target sensing object can be referred to as a non-target UE or another UE.

The second message carries information of each of one or more electronic devices within each target sensing area of each granularity. In the second message, the information of each electronic device within each target sensing area of each granularity can be represented in the form of a list. Exemplarily, the information of each electronic device within each target sensing area of each granularity can be a list of IDs of electronic devices within each target sensing area of each granularity which are affected by the first sensing task and different from the target sensing object (or simply referred to as a list of non-target IDs affected by the first sensing task of each granularity). Unless otherwise specified in the following text, the affected UE ID list can include an affected non-target UE ID list, and will not be repeated; and the affected non-target UE ID list and the list of IDs of electronic devices affected by the first sensing task within the target sensing area have the same meaning, and will not be repeated. In some possible examples, the aforementioned non-target UE can also be referred to as a non-sensing target UE.

Exemplarily, the information of the target sensing object includes the first location of the target sensing object.

The target sensing object can refer to a target sensing entity. Exemplarily, the target sensing object can be referred to as a target object, or a non-UE target, or a non-UE target object, or a non-UE target entity. For example, the target sensing object can include but not be limited to at least one of the following: a vehicle, a vehicle identifier (such as a license plate), etc. It should be understood that this is only an exemplary illustration and does not limit all possible types of target sensing objects. Alternatively, the aforementioned target sensing object can also be a target terminal, which is within the scope of protection of this embodiment. The first location can be one of the following: geographical location, cell location, registration area location, tracking area location, etc. The geographical location can be represented by coordinates, such as latitude and longitude.

The first network device determining the second location of the target sensing object based on the information of the target sensing object can be: the first network device taking the first location of the target sensing object as the second location of the target sensing object.

The one or more granularities include at least one of the following: registration area (RA), tracking area (TA), cell, sector, specified radius. The first network device determines a target sensing area of each of one or more granularities corresponding to the target sensing object based on the second location of the target sensing object, and the first network device determines one or more electronic devices different from the target sensing object from one or more candidate devices within each target sensing area of each granularity. The above operations are the same as the previous embodiment, and will not be repeated. Any electronic device different from the target sensing object can refer to any UE with a first location different from that of the target sensing object. In some possible examples, any electronic device different from the target sensing object can be referred to as a non-target UE or another UE.

The second message carries information of each of one or more electronic devices within each target sensing area of each granularity, that is, a list of IDs of electronic devices affected by the first sensing task within each target sensing area of each granularity (or simply referred to as a list of non-target UE IDs affected by the first sensing task for each granularity). The detailed explanation of the second message is the same as the previous example, and will not be repeated.

Optionally, the first network device determining one or more electronic devices within the target sensing area based on the information of the first sensing task includes: the first network device determining a second location of the target sensing object based on the information of the target sensing object; the first network device determining a target sensing area of the target granularity corresponding to the target sensing object based on the second location of the target sensing object and the target granularity; the first network device determining one or more electronic devices different from the target sensing object from one or more candidate devices within the target sensing area of the target granularity corresponding to the target sensing object.

The target granularity can be used to indicate the range (or size of the range) that the first sensing task needs to sense. In some possible examples, the target granularity can also be referred to as a sensing range. The target granularity can include one of the following: registration area (RA), tracking area (TA), cell, sector, specified radius. The specified radius can be indicated according to the actual situation, for example, it can be several meters, or several hundred meters, or larger or smaller; for example, if the specified radius is several meters, it indicates that the range that the first sensing task needs to sense is within several meters around the target sensing object; if the specified radius is several hundred meters, it indicates that the range that the first sensing task needs to sense is within several hundred meters around the target sensing object.

The target granularity is pre-configured; or, the target granularity is carried by the information of the first sensing task.

For example, the target granularity is pre-configured, which can refer to that the target granularity is pre-configured by the operator, or it can refer to that the target granularity is configured for the first network device by other network devices. For example, the target granularity can be configured by AF for the first network device, or it can be configured by SMF for the first network device, or it can be configured by a second network device with a sensing capability for the first network device, etc., and the way in which the first network device obtains the target granularity is not limited here.

For example, the target granularity is carried by the information of the first sensing task. That is, the target granularity can be determined by the first device and included in the information of the first sensing task in the sensing request. The first device is an initiating device of the first sensing task, or can also be referred to as the initiator of the first sensing task. For example, for an object-oriented first sensing task, the initiator of the first sensing task, that is, the first device (which can be a UE, or AF, etc.) will include the target UE ID (that is, the target sensing object is a target UE) as well as the sensing range (that is, the aforementioned target granularity) in the sensing request, or include the target location coordinates (corresponding to the aforementioned non-UE target) as well as the sensing range in the sensing request.

The information of the target sensing object includes identity information of the target sensing object and/or the first location of the target sensing object. The explanation of the identity information and the first location of the target sensing object is the same as the previous embodiment, and will not be repeated.

The first network device determining the second location of the target sensing object based on the information of the target sensing object is the same as the previous embodiment, and will not be repeated. The target sensing area of the target granularity corresponding to the target sensing object can include one of the following: a target sensing area under RA (or target RA), a target sensing area under TA (or target TA), a target sensing area under a cell (or target cell), a target sensing area under a sector (or target sector), and a target sensing area under a specified radius. The first network device determining one or more electronic devices different from the target sensing object from one or more candidate devices within the target sensing area of the target granularity corresponding to the target sensing object can include the following. The first network device determines one or more candidate devices within the target sensing area of the target granularity corresponding to the target sensing object, and then the first network device determines one or more electronic devices different from the target sensing object from one or more candidate devices within the target sensing area of the target granularity. Any electronic device different from the target sensing object can refer to any UE with identity information different from that of the target sensing object, and/or any electronic device with a first location different from that of the target sensing object. In some possible examples, any electronic device different from the target sensing object can be referred to as a non-target UE or another UE.

The second message carries information of each of one or more electronic devices within the target sensing area of the target granularity. In the second message, the information of each of one or more electronic device within the target sensing area of the target granularity can be represented in the form of a list. For example, the information of each electronic device within the target sensing area of the target granularity can be a list of IDs of each electronic device within the target sensing area of the target granularity, which is affected by the first sensing task and different from the target sensing object, or simply referred to as a list of non-target UE IDs affected by the first sensing task for the target granularity.

In one possible example, the first sensing task is an area-oriented sensing task. The information of the first sensing task includes a target sensing area of the first sensing task. In this case, the aforementioned one or more electronic devices within the target sensing area can refer to all electronic devices within the target sensing area, that is, all electronic devices affected by the first sensing task.

The target sensing area of the first sensing task can include one or more area of interest (AoI) corresponding to the first sensing task. Each AoI can be composed of at least one of the following: one or more target TA, one or more target cells, one or more target sectors, one or more target sensing areas with a specified radius. Optionally, in the sensing request, the target sensing area of the first sensing task can be indicated by at least one of the following: an identifier of one or more TAs, an identifier of one or more target cells, an identifier of one or more target sectors, a location of one or more target sensing areas with a specified radius.

The first network device determining the one or more electronic devices within the target sensing area based on the information of the first sensing task includes the following. The first network device determines one or more candidate devices within the target sensing area, and takes the one or more candidate devices as the one or more electronic devices. Exemplarily, the first network device determining one or more candidate devices within the target sensing area, and taking the one or more candidate devices as the one or more electronic devices can be as follows. The first network device identifies all candidate electronic devices within the target sensing area from its locally stored UE contexts of all UEs, and takes all of the identified candidate electronic devices as the electronic devices within the target sensing area. That is, by implementing the solution provided in this embodiment, the first network device can ultimately determine all electronic devices within the target sensing area, which can refer to all electronic devices affected by the first sensing task. For example, all electronic devices within the target sensing area can be referred to as all non-target electronic devices (or non-target UEs) within the target sensing area and affected by the first sensing task, or simply referred to as non-target UEs affected by the first sensing task.

In this example, the aforementioned second message can carry information of each of one or more electronic devices within the target sensing area. The information of each electronic device within the target sensing area can be a list of IDs of electronic devices affected by the first sensing task, for example, it can be represented as an Affected UE ID list. The detailed explanation of the second message is the same as the previous embodiment, and will not be repeated.

Furthermore, regarding the privacy protection of the one or more electronic devices within the target sensing area (for example, including the aforementioned non-sensing target UE), there can be the following three methods. Subscription message authorization: the network determines whether a certain sensing service is allowed by querying the subscription message of the non-sensing target UE. User confirmation: the network directly confirms with the non-sensing target UE, and determines whether the sensing service is allowed based on a confirmation result of the aforementioned UE. Secondary authorization after data collection: corresponding to the situation where the network has already collected sensing measurement data (for example, the network has performed similar tasks and has relevant data stored), the network can confirm with the user whether the data can be opened to a certain UE, RAN, network element, AF. No matter which of the above authorization methods is adopted, the problem that must be solved is how the network determines the non-sensing target UE that will be affected by the sensing task. Because in the information of the sensing task, only the target information will be carried, such as the target UE ID, target area identifier, etc., and it is not possible to know in advance all the UEs (for example, non-target UEs) that may be affected by the sensing task. Therefore, it is necessary for the 5GS to infer in advance the non-target UE that may be affected through the information of the sensing task, that is, to infer in advance one or more electronic devices within the target sensing area through the information of the sensing task. Specifically, the method for determining one or more electronic devices within the target sensing area is summarized as follows: find the serving AMF of the target UE through the target UE ID, and then query the AMF for other non-target UEs in the same area as the target UE, such as the same TA, cell; find other non-target UEs currently served, through the RAN node performing the sensing task.

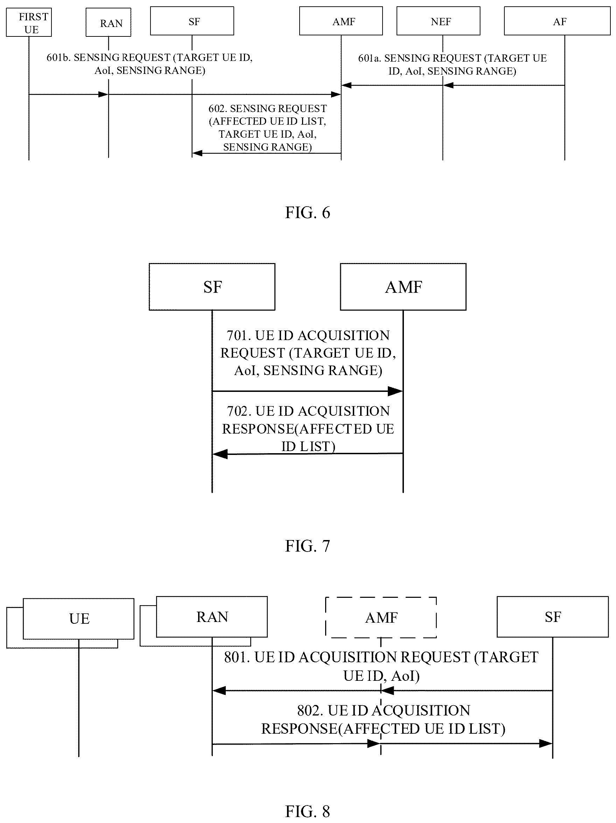

Combining Figure 6, taking the first device as the first UE or AF, the first network device as AMF, and the second network device as SF as an example, the solution provided by the aforementioned implementation is exemplarily illustrated. In Figure 6, the first message is exemplified as a sensing request, and the second message is also described exemplarily as a sensing request. The scenario illustrated in Figure 6 is as follows: when the sensing request is forwarded by AMF, that is, when AMF performs SF selection, AMF identifies UEs within the sensing range based on the locally stored UE context. When the sensing request initiated by the first UE or AF is forwarded to SF by AMF, AMF can assist in identifying UEs that may be affected by the first sensing task, and send the identified UE ID list along with the sensing request to SF. The processing procedure is as follows.

Step 601a: The first UE sends a sensing request to AMF; or, Step 601b: AF sends a sensing request to AMF. The sensing request can carry at least one of the following: the ID of the target UE, AoI, sensing range. The ID of the target UE is the identity of the target sensing object in the aforementioned embodiment. AoI is the target sensing area of the first sensing task in the aforementioned embodiment. The sensing range is the target granularity in the aforementioned embodiment.

In Step 601a, the first UE can send the sensing request to AMF through the RAN. In Step 601b, AF can send the sensing request to AMF through NEF. The aforementioned UE or AF can be referred to as the task initiator (or sensing task initiator, or initiator of the first sensing task), and it should be understood that the task initiator, in addition to the UE or AF illustrated in Figure 6, can also be other network elements, and this example does not list all possibilities. Specifically, for Steps 601a and 601b, for an object-oriented sensing task, the task initiator (UE, AF, or other network element) will include in the sensing request the ID of the target UE, or the target location coordinates (corresponding to the non-UE target, that is, the first location of the target sensing object in the aforementioned embodiment), and the sensing range. The sensing range indicates the range that the sensing task needs to sense, and can be RA granularity, TA granularity, cell granularity, or a customized sensing range. For example, the customized sensing range can be a specified radius, such as several meters, several hundred meters around the sensing target, etc. For an area-oriented sensing task, the sensing request will contain the target sensing area of the first sensing task. The target sensing area is AoI, for example, AoI can be one or more TAs, and one TA can include one or more Cells.

Step 602: AMF forwards the sensing request to SF, the sensing request carrying a ID list of affected UE (Affected UE ID list), and can also carry at least one of the target UE ID, sensing range, AoI.

In the processing of Step 602, AMF can determine the information of each electronic device within the target sensing area, and then send the Affected UE ID list carried in the sensing request to SF. That is, after receiving the sensing request, AMF can compare the location information in the UE context of all UEs locally stored to identify non-target UEs whose location information overlaps with or is contained in the location information of the target UE, and send the ID list of non-target UEs to SF. The aforementioned location information includes registration area, TAI of last registration, user location information (including the Cell ID of a cell where the UE is located), etc. Specifically, according to the differences in the information of the first sensing task included in the sensing request (hereinafter referred to as information contained in the sensing request), there can be the following processing methods.
a) The sensing request includes target UE ID (that is, the identity information of the target sensing object) and sensing range (that is, the target granularity). AMF can identify non-target UEs within the area level indicated by the sensing range of the target UE based on the UE context of all UEs locally stored, and take the non-target UEs within the area level indicated by the sensing range of the target UE as that included in the UE ID list affected by the first sensing task. For example, if the sensing range is TA, AMF can identify non-target UEs in the same TA as the target UE based on the UE context, and include the UE ID list of UEs affected by the first sensing task in the sensing request sent to SF.
b) The sensing request contains only the target UE ID: AMF can identify non-target UEs in various granularity (or various dimensions) areas such as RA, TA, and cell where the target UE is located, based on the UE context of all UEs locally stored. It can send to SF the non-target UE ID list of UEs in the same RA as the target UE, the non-target UE ID list of UEs in the same TA as the target UE, and the non-target UE ID list of UEs in the same cell as the target UE. It can also select one of the above UE ID lists based on pre-configured information or sensing task requirements and send the selected list to SF.
c) The sensing request contains only the sensing area AoI (that is, the target sensing area of the first sensing task): AMF can identify other UEs within the area indicated by AoI (that is, all UEs in area indicated by the AoI) based on the UE context of all UEs locally stored, and include the UE ID list of UEs affected by the first sensing task in the sensing request message sent to SF.
d) The sensing request contains the location information of the non-UE target object (that is, the first location of the target sensing object), for example, the specific coordinates (external coordinate information in the sensing request can be converted into internal coordinate information that the 5GS can understand through NEF). AMF identifies non-target UEs in various granularity (or various dimensions) areas such as RA, TA, and cell where the non-UE target object is located, and sends to SF the non-target UE ID list of UEs in the same RA as the non-UE target object, the non-target UE ID list of UEs in the same TA as the non-UE target object, and the non-target UE ID list of UEs in the same cell as the non-UE target object. It can also select one of the above UE ID lists based on pre-configured information or sensing task requirements and send the selected list to SF.
e) The sensing request contains the location and the sensing range of the non-UE target object. AMF can identify non-target UEs within the area level indicated by the sensing range of the non-UE target object based on the UE context of all UEs locally stored, and send the non-target UE list of UEs affected by the first sensing task to SF.

By adopting the above example, when AMF forwards the sensing request, it can identify non-target UEs that may be affected by the first sensing task. When forwarding the first sensing task (that is, the sensing request), it can also send the UE ID list of UEs affected by the first sensing task to SF, which saves signaling loss to a certain extent. And due to the sensing range specified by the sensing task initiator, AMF can retrieve UE contexts within a smaller range, reducing retrieval time and computational load. The operation of AMF assisting in identifying UEs can be completed before the SF performs the sensing node selection and other sub-processes, so that SF can request authorization from non-target UEs before performing the sensing sub-process, improving processing efficiency.

In some possible implementations, the first network device receiving a first message includes the following. The first network device receives a first message sent by the second network device, the first message is used to request information of each electronic device within the target sensing area. The first network device sending a second message includes the following. The first network device sends the second message to the second network device. Correspondingly, the second network device receiving the second message includes the following. The second network device receives the second message sent by the first network device.

In this implementation, the first network device can be a first core network device or a second access network device; the second network device can be a second core network device with a sensing capability.

Before the second network device receives the second message, the method further includes the following. The second network device receives a sensing request sent by a first device, the sensing request carries information of the first sensing task, the first device is the initiator of the first sensing task. The second network device determines the first network device based on the information of the first sensing task. The second network device sends the first message to the first network device, the first message is used to request information of each electronic device within the target sensing area, and the first message carries information of the first sensing task.

The first message in this implementation is different from the aforementioned embodiments. In this implementation, the first message is not the sensing request or does not carry the sensing request, but only carries information of the first sensing task. The first message is only used to obtain information of each electronic device within the target sensing area, that is, the first message is only used to request the first network device to identify the UEs within the target sensing area. Exemplarily, in this implementation, the first message can be referred to as a UE ID acquisition request. The UE within the target sensing area can be a non-target UE that is within the target sensing area, different from the target UE, and affected by the first sensing task, or the UE within the target sensing area can refer to a UE that is within the target sensing area and affected by the first sensing task.

The second message in this implementation is also different from the aforementioned embodiment. The second message only carries information of each electronic device within the target sensing area. Exemplarily, in this implementation, the second message can be referred to as a UE ID acquisition response. That is, the second message only carries the UE ID list of UEs that is within the target sensing area and affected by the first sensing task, for example, the second message carries the non-target UE ID list of the UEs that is within the target sensing area, different from the target UE, and affected by the first sensing task, or the second message carries the UE ID list of UEs that is within the target sensing area and affected by the first sensing task.

The aforementioned second network device receiving the sensing request sent by the first device can refer to that the second network device directly receives a sensing request sent by the first device; in other words, the first device does not need to forward the sensing request to the second network device via the first network device, but directly sends the sensing request to the second network device with sensing capability. The aforementioned first device can be one of the following: a first terminal device, a first access network device, a first server, a third core network device, and the explanation of the first device is the same as the aforementioned embodiment, and will not be repeated.

Optionally, the aforementioned first network device can be a first core network device. In this case, the second network device determining the first network device based on the information of the first sensing task can vary depending on the information of the first sensing task.

Exemplarily, the first sensing task is an object-oriented sensing task, and the information of the first sensing task includes information of the target sensing object. The second network device determining the first network device based on the information of the first sensing task includes the following. The second network device determines the second location of the target sensing object based on the information of the target sensing object. The second network device determines the first network device whose serving area covers the second location of the target sensing object. The second location of the target sensing object can include at least one of the following: the geographical location of the target sensing object, the identifier of a cell where the target sensing object is located, the TAI of the target sensing object, the identifier of the registration area where the target sensing object is located, the identifier of a sector within the cell where the target sensing object is located. The second network device determining the first network device whose serving area covers the second location of the target sensing object can refer to that, the second network device determines a candidate core network device whose serving area includes the second location of the target sensing object based on a serving area corresponding to each candidate core network device among one or more candidate core network devices, and takes the candidate core network device whose serving area includes the second location of the target sensing object as the first network device. The aforementioned candidate core network device can be a candidate AMF, and the first network device can be AMF.

It should be understood that in this example, the information of the first sensing task can also include target granularity. The explanation of the target granularity is the same as the aforementioned embodiment, and will not be repeated.

Exemplarily, the first sensing task is an area-oriented sensing task, and the information of the first sensing task includes the target sensing area of the first sensing task. The second network device determining the first network device based on the information of the first sensing task includes the following. The second network device determines the first network device whose serving area covers the target sensing area. For example, the second network device determines a candidate core network device whose serving area includes the target sensing area based on a serving area corresponding to each candidate core network device among one or more candidate core network devices, and takes the candidate core network device whose serving area includes the target sensing area as the first network device. The aforementioned candidate core network device can be a candidate AMF, and the first network device can be AMF.

After the first network device receiving the first message used to request information of each electronic device within the target sensing area and before sending the second message, the method can include: the first network device determining the one or more electronic devices within the target sensing area based on the information of the first sensing task.

In some possible implementations, the aforementioned first network device is a first core network device.

Optionally, the information of the first sensing task includes information of the target sensing object of the first sensing task.

The first network device determining the one or more electronic devices within the target sensing area based on the information of the first sensing task includes the following. The first network device takes its own serving area as the target sensing area, and the first network device determines one or more electronic devices different from the target sensing object from one or more candidate devices within the target sensing area. That is, in the case where the first sensing task is an object-oriented sensing task and the information of the first sensing task only includes information of the target sensing object of the first sensing task, the first network device takes its own serving area as the target sensing area, thereby taking all electronic devices within its own serving area as all candidate electronic devices, and then determines one or more electronic devices different from the target sensing object from all candidate electronic devices. The one or more electronic devices different from the target sensing object can be referred to as one or more non-target electronic devices (or non-target UEs) different from the target sensing object.

In this case, the content carried by the second message can be a list of IDs of each electronic device within the target sensing area, affected by the first sensing task, and different from the target sensing object. Alternatively, the first network device determining the one or more electronic devices within the target sensing area based on the information of the first sensing task includes the following. The first network device determines the second location of the target sensing object based on the information of the target sensing object. The first network device determines a target sensing area of each of one or more granularities corresponding to the target sensing object based on the second location of the target sensing object. The first network device determines one or more electronic devices different from the target sensing object from one or more candidate devices within each target sensing area of each granularity.

The first network device determines the target sensing area of each of one or more granularities corresponding to the target sensing object based on the second location of the target sensing object can include the following. The first network device determines, within its own serving area, a target sensing area of one or more granularities that includes the second location of the target sensing object based on the second location of the target sensing object. The first network device determining the second location of the target sensing object based on the information of the target sensing object is the same as the aforementioned embodiment, and will not be repeated. The first network device determining one or more electronic devices different from the target sensing object from one or more candidate devices within each target sensing area of each granularity is also the same as the aforementioned embodiment, and will not be repeated. In this case, the content carried by the second message can be information of each of one or more electronic devices within each target sensing area of each granularity, that is, a list of IDs of each electronic device within each target sensing area of each granularity, affected by the first sensing task, and different from the target sensing object (or simply referred to as a list of non-target UE IDs affected by the first sensing task for each granularity). The detailed explanation of the second message is the same as the previous example, and will not be repeated.

Alternatively, the first network device determining the one or more electronic devices within the target sensing area based on the information of the first sensing task includes the following: The first network device determines the second location of the target sensing object based on the information of the target sensing object. The first network device determines a target sensing area of the target granularity corresponding to the target sensing object based on the second location of the target sensing object and the target granularity. The first network device determines one or more electronic devices different from the target sensing object from one or more candidate devices within the target sensing area of the target granularity corresponding to the target sensing object.

The target granularity is the sensing range, can be pre-configured, or can be carried by the information of the first sensing task. The detailed explanation of the target granularity is the same as the aforementioned embodiment, and will not be repeated. The first network device determining the second location of the target sensing object based on the information of the target sensing object, the first network device determining a target sensing area of the target granularity corresponding to the target sensing object based on the second location of the target sensing object and the target granularity, and the first network device determining one or more electronic devices different from the target sensing object from one or more candidate devices within the target sensing area of the target granularity corresponding to the target sensing object are also the same as the aforementioned embodiment, and will not be repeated. In this case, the aforementioned second message can carry information of each of one or more electronic devices within the target sensing area of the target granularity. The detailed explanation of the carrying method and the detailed explanation of the information of each of one or more electronic devices within the target sensing area of the target granularity are also the same as the aforementioned embodiment, and will not be repeated.

Optionally, the information of the first sensing task includes the target sensing area of the first sensing task.

In this case, the first network device determining the one or more electronic devices within the target sensing area based on the information of the first sensing task includes the following. The first network device determines one or more candidate devices within the target sensing area, and takes the one or more candidate devices as the one or more electronic devices. The detailed explanation of the first network device determining one or more candidate devices within the target sensing area and taking the one or more candidate devices as the one or more electronic devices is the same as the aforementioned embodiment, and will not be repeated. In this case, the second message can carry information of each of one or more electronic devices within the target sensing area. The detailed explanation of the information of each electronic device within the target sensing area is the same as the aforementioned embodiment, and will not be repeated.

Combining Figure 7, taking the first network device as AMF and the second network device as SF as an example, the solution provided by the aforementioned implementation is exemplarily illustrated. The scenario illustrated in Figure 7 is as follows. When the sensing request sent by the first UE (that is, the aforementioned first device) or AF is forwarded to SF without via AMF, but the first UE or AF directly sends the sensing request to SF, SF selects AMF based on the information of the target sensing object (for example, the ID of the target UE or the first location of the target sensing object) or the target sensing area, and AMF identifies non-target UEs within the sensing area or all UEs affected by the first sensing task according to UE context locally stored. As illustrated in Figure 7, when the sensing request is sent directly to the SF node (not via the AMF), for object-oriented sensing, the SF can find the AMF whose serving area covers the location of the target sensing object; for area-oriented sensing, the SF can find the AMF whose serving area covers the target sensing area. Then, the SF requests the AMF to assist the SF in identifying non-target UEs within the sensing area. The procedure is given below

Step 701, SF sends a UE ID acquisition request to AMF.

The aforementioned UE ID acquisition request message can be the first message used to request information of each electronic device within the target sensing area in the aforementioned embodiment. For object-oriented sensing, the message may contain the target UE ID as illustrated in Figure 7, or it can contain the first location of the target sensing object (that is, the location information of the target object). Further, the message as illustrated in Figure 7 can also contain information such as the sensing range. For an area-oriented sensing, the message may contain the AoI as illustrated in Figure 7, that is, the target sensing area of the first sensing task.

Step 702, AMF sends a UE ID acquisition response to SF. The UE ID acquisition response is the second message carrying information of each of one or more electronic devices within the target sensing area as mentioned above. For example, as illustrated in Figure 7, the UE ID acquisition response can only carry the Affected UE ID list.

In this step, the method for AMF to determine the Affected UE ID list is the same as the aforementioned embodiment, and will not be repeated. It should be noted that in this example, the second message is a UE ID acquisition response message only carrying the Affected UE ID list, and the second message no longer carries the sensing request or the second message is no longer used to request sensing.

This example mainly solves the problem of obtaining the ID of non-target UEs in a scenario where the sensing request is forwarded to SF without via AMF or SF needs to query the UE to which existing sensing measurement data belongs.

In some possible implementations, the aforementioned first network device is a first access network device.

The second network device determining the first network device based on the information of the first sensing task includes one of the following.

When determining that a sensing mode of the first sensing task is a mode of sensing executed by an access network device, the second network device determines candidate access network devices for executing the first sensing task based on the information of the first sensing task, and determines the first network device based on the candidate access network devices for executing the first sensing task.

When determining that the sensing mode of the first sensing task is a mode of sensing executed by a terminal device, the second network device determines candidate terminal devices for executing the first sensing task based on the information of the first sensing task, and determines the first network device based on the candidate terminal devices for executing the first sensing task.

When determining that the sensing mode of the first sensing task is a mode of sensing executed by the access network device and the terminal device, the second network device determines candidate access network devices and candidate terminal devices for executing the first sensing task based on the information of the first sensing task, and determines the first network device based on the candidate access network devices and the candidate terminal devices for executing the first sensing task.

Exemplarily, the sensing request can also contain information of the sensing mode of the first sensing task. After receiving the sensing request sent by the first device, the second network device can determine the sensing mode of the first sensing task as follows: the second network device determines the sensing mode of the first sensing task based on the information of the sensing mode of the first sensing task included in the sensing request.

The information of the sensing mode of the first sensing task can include one of the following: a mode of sensing executed by an access network device, a mode of sensing executed by a terminal device, a mode of sensing collaboratively executed by an access network device and a terminal device.

The mode of sensing executed by an access network device can include one of the following: a mode of sensing executed by a single access network device, a mode of sensing collaboratively executed by multiple access network devices. The mode of sensing executed by a single access network device can be a mode in which a single access network device sends a sensing signal and receives an echo signal for the sensing signal, and the mode of sensing executed by a single access network device can also be referred to as a sensing mode of self-sending and self-receiving by an access network device. The mode of sensing collaboratively executed by multiple access network devices can be a mode in which one or more access network devices sending sensing signals and another one or more access network devices receiving the sensing signals and sending echo signals for the sensing signals. It should be noted that in the mode of sensing executed by an access network, access network devices executing sensing can be referred to as access network device sensing nodes.

The mode of sensing executed by a terminal device can include one of the following: a mode of sensing executed by a single terminal device, a mode of sensing collaboratively executed by multiple terminal devices. The mode of sensing executed by a single terminal device can be a mode in which a single terminal device sends a sensing signal and receives an echo signal for the sensing signal, and the mode of sensing executed by a single terminal device can also be referred to as a sensing mode of self-sending and self-receiving by a terminal device. The mode of sensing collaboratively executed by multiple terminal devices can be a mode in which one or more terminal devices sending sensing signals and another one or more terminal devices receiving the sensing signals and sending echo signals for the sensing signals. It should be noted that in the mode of sensing executed by an access network, terminal devices executing sensing can be referred to as terminal device sensing nodes.

The mode of sensing collaboratively executed by an access network device and a terminal device can include one of the following: one or more terminal devices sending sensing signals and one or more access network devices receiving the sensing signals and sending echo signals for the sensing signals; one or more access network devices sending sensing signals and one or more terminal devices receiving the sensing signals and sending echo signals for the sensing signals. It should be noted that in the mode of sensing collaboratively executed by an access network device and a terminal device, the terminal devices executing sensing can be referred to as terminal device sensing nodes, and the access network devices executing sensing can be referred to as access network device sensing nodes.

Optionally, the second network device, when determining that the sensing mode of the first sensing task is a mode of sensing executed by an access network device, determining a candidate access network device for executing the first sensing task based on the information of the first sensing task, and determining the first network device based on the candidate access network device for executing the first sensing task can refer to: the second network device, when determining that the sensing mode of the first sensing task is a mode of sensing executed by an access network device, determining one or more candidate access network devices for executing the first sensing task based on the information of the first sensing task, and taking each of one or more candidate access network devices for executing the first sensing task as each first network device.

Determining one or more candidate access network devices for executing the first sensing task based on the information of the first sensing task can be: determining a target sensing area based on the information of the first sensing task, and determining one or more candidate access network devices for executing the first sensing task based on the target sensing area and the mode of sensing executed by an access network device. Here, the candidate access network device can refer to an access network device sensing node.

Regarding determining the target sensing area based on the information of the first sensing task, it can be determining a second location of the target sensing object based on the information of the target sensing object of the first sensing task, and determining the target sensing area of the target granularity or determining the target sensing area of each of one or more granularities corresponding to the target sensing object based on the second location of the target sensing object. Alternatively, determining the target sensing area based on the information of the first sensing task can be directly taking a target sensing area of the first sensing task included in the information of the first sensing task as the target sensing area. Determining the target sensing area of the target granularity or determining the target sensing area of each of one or more granularities corresponding to the target sensing object based on the second location of the target sensing object is basically the same as the aforementioned embodiment, and will not be repeated.

Determining one or more candidate access network devices for executing the first sensing task based on the target sensing area and the mode of sensing executed by an access network device can refer to one of the following: if the mode of sensing executed by an access network device is a mode of sensing executed by a single access network device, determining one candidate access network device for executing the first sensing task from all candidate access network devices within the target sensing area; if the mode of sensing executed by an access network device is a mode of sensing collaboratively executed by multiple access network devices, determining multiple candidate access network devices for executing the first sensing task from all candidate access network devices within the target sensing area.

It should be noted that if the candidate access network device for executing the first sensing task is one candidate access network device, it can be directly taken as the first network device. If the candidate access network device for executing the first sensing task is multiple candidate access network devices, each candidate access network device can be taken as a first network device. However, it should be noted that the processing of each of the multiple first network devices is the same, so this embodiment only illustrates one of them, without listing all of them.

In the processing of the second network device sending the first message to the first network device, the second network device can send the first message to each first network device respectively. That is, for the sensing mode of self-sending and self-receiving by an access network device or the mode of sensing collaboratively executed by multiple access network devices, the second network device needs to send the aforementioned first message to one or more access network devices (that is, one or more first network devices) participating in the first sensing task. The first message does not carry the sensing request or is not perceived as the sensing request, but only carries information related to the first sensing task. The first message is only used to obtain information of each electronic device within the target sensing area, that is, the first message is only used to request the first network device to identify UEs located within the target sensing area. Exemplarily, in this implementation, the first message can be referred to as a UE ID acquisition request.

Optionally, the second network device, when determining that the sensing mode of the first sensing task is the mode of sensing executed by a terminal device, determining the candidate terminal device for executing the first sensing task based on the information of the first sensing task, and determining the first network device based on the candidate terminal device for executing the first sensing task can refer to: the second network device, when determining that the sensing mode of the first sensing task is the mode of sensing executed by a terminal device, determining one or more candidate terminal devices for executing the first sensing task based on the information of the first sensing task, determining a candidate access network device corresponding to each candidate terminal device among the one or more candidate terminal devices, and determining the first network device based on each candidate access network device corresponding to the candidate terminal device.

The candidate access network device corresponding to any one candidate terminal device can refer to a candidate access network device serving the candidate terminal device. Here, the candidate terminal device can refer to a terminal device sensing node.

Determining one or more candidate terminal devices for executing the first sensing task based on the information of the first sensing task can be: determining a target sensing area based on the information of the first sensing task, and determining one or more candidate terminal devices for executing the first sensing task based on the target sensing area and the mode of sensing executed by a terminal device.

Regarding determining the target sensing area based on the information of the first sensing task, it is the same as the aforementioned embodiment, and will not be repeated.

Determining one or more candidate terminal devices for executing the first sensing task based on the target sensing area and the mode of sensing executed by a terminal device can refer to one of the following: if the mode of sensing executed by a terminal device is a mode of sensing executed by a single terminal device, determining one candidate terminal device for executing the first sensing task from all candidate terminal devices within the target sensing area; if the mode of sensing executed by a terminal device is a mode of sensing collaboratively executed by multiple terminal devices, determining multiple candidate terminal devices for executing the first sensing task from all candidate terminal devices within the target sensing area.

It should be noted that if the candidate terminal device for executing the first sensing task is one candidate terminal device, it can be directly taken as the first network device. If the candidate terminal device for executing the first sensing task is multiple candidate terminal devices, when each candidate terminal device among the multiple candidate terminal devices corresponds to the same candidate access network device, the candidate access network device is taken as the first network device; when the multiple candidate terminal devices correspond to multiple candidate access network devices, the multiple candidate access network devices are taken as multiple first network devices. However, it should be noted that the processing of each of the multiple first network devices is the same, so this embodiment only illustrates one of them, without listing all of them.

In the processing of the second network device sending the first message to the first network device, the second network device can send the first message to each first network device respectively. That is, for the sensing mode of self-sending and self-receiving by a terminal device or the mode of sensing collaboratively executed by multiple terminal devices, the second network device takes each candidate access network device corresponding to each of the one or more candidate terminal devices participating in the first sensing task as each first network device, and sends the aforementioned first message to each first network device. Exemplarily, in this implementation, the first message can be referred to as a UE ID acquisition request.

Optionally, the second network device, when determining that the sensing mode of the first sensing task is a mode of sensing collaboratively executed by an access network device and a terminal device, determining a candidate access network device and a candidate terminal device for executing the first sensing task based on the information of the first sensing task, and determining the first network device based on the candidate access network device and the candidate terminal device for executing the first sensing task can refer to: the second network device, when determining that the sensing mode of the first sensing task is a mode of sensing collaboratively executed by an access network device and a terminal device, determining one or more candidate access network devices and one or more candidate terminal devices for executing the first sensing task based on the information of the first sensing task, determining a candidate access network device corresponding to each candidate terminal device among the one or more candidate terminal devices, and determining one or more first network devices based on the one or more candidate access network devices for executing the first sensing task and each candidate access network device corresponding to each candidate terminal device for executing the first sensing task.

Determining one or more candidate access network devices and one or more candidate terminal devices for executing the first sensing task based on the information of the first sensing task can be: determining a target sensing area based on the information of the first sensing task, and determining one or more candidate access network devices and one or more candidate terminal devices for executing the first sensing task based on the target sensing area and the mode of sensing collaboratively executed by an access network device and a terminal device. Regarding determining the target sensing area based on the information of the first sensing task, it is the same as the aforementioned embodiment, and will not be repeated.

Determining one or more candidate access network devices and one or more candidate terminal devices for executing the first sensing task based on the target sensing area and the mode of sensing collaboratively executed by an access network device and a terminal device can refer to one of the following: determining one or more candidate terminal devices for executing the first sensing task from all candidate terminal devices within the target sensing area, and determining one or more candidate access network devices for executing the first sensing task from all candidate access network devices within the target sensing area.

It should be noted that if the candidate terminal device for executing the first sensing task is one candidate terminal device, a candidate access network device corresponding to the candidate terminal device can be directly taken as the first network device. If the candidate terminal device for executing the first sensing task is multiple candidate terminal devices, and each of the multiple candidate terminal devices corresponds to the same candidate access network device, the candidate access network device can be taken as the first network device; if the multiple candidate terminal devices correspond to multiple candidate access network devices, the multiple candidate access network devices can be taken as multiple first network devices. It should be noted that the processing of each of the multiple first network devices is the same, so this embodiment only illustrates one of them, without listing all of them.

In the processing of the second network device sending the first message to the first network device, the second network device can send the first message to each first network device respectively. That is, in the mode of sensing collaboratively executed by an access network device and a terminal device, the second network device takes each candidate access network device corresponding to each of the one or more candidate terminal devices participating in the first sensing task as each first network device, and also takes the one or more candidate access network devices participating in the first sensing task as each first network device, and sends the aforementioned first message to each first network device. Exemplarily, in this implementation, the first message can be referred to as a UE ID acquisition request.

In this implementation, after the first network device receives the first message, based on the information of the first sensing task, the first network device determines one or more electronic devices within the target sensing area.

Optionally, the information of the first sensing task only includes information of the target sensing object of the first sensing task. Accordingly, the first network device determining the one or more electronic devices within the target sensing area based on the information of the first sensing task includes: the first network device taking its own serving area as the target sensing area; the first network device determining one or more electronic devices different from the target sensing object, from one or more candidate devices within the target sensing area. The detailed explanation of this processing is the same as the aforementioned embodiment, and the difference is that the first network device in this implementation is a first access network device, and will not be repeated.

Alternatively, the first network device determining the one or more electronic devices within the target sensing area based on the information of the first sensing task includes: the first network device determining a second location of the target sensing object based on the information of the target sensing object; the first network device determining a target sensing area of a target granularity corresponding to the target sensing object based on the second location of the target sensing object and the target granularity; the first network device determining one or more electronic devices different from the target sensing object, from one or more candidate devices within the target sensing area of the target granularity corresponding to the target sensing object. The detailed explanation of this processing is the same as the aforementioned embodiment, and the difference is that the first network device in this implementation is a first access network device, and will not be repeated.

Optionally, the information of the first sensing task only includes the target sensing area of the first sensing task. The first network device determining the one or more electronic devices within the target sensing area based on the information of the first sensing task includes: the first network device determining one or more candidate devices within the target sensing area, and taking the one or more candidate devices as the one or more electronic devices. The above processing is the same as the aforementioned embodiment, and will not be repeated. The difference from the aforementioned embodiment is that the first network device in this implementation is a first access network device, and will not be repeated.

In this implementation, the second message can carry information of each electronic device within the target sensing area. Exemplarily, in this implementation, the second message can be referred to as a UE ID acquisition response, and the detailed explanation of the second message is the same as the aforementioned embodiment, and will not be repeated.

When SF selects a sensing node (UE or RAN) for executing the sensing task, SF can send a query request to all RAN nodes participating in the sensing task or to a RAN node currently serving the UE participating in the sensing task, and the RAN node reports the UE ID of the UE(s) it is currently serving to SF. Combining Figure 8, taking the first network device as RAN and the second network device as SF as an example, the solution provided by the aforementioned implementation is exemplarily illustrated. As illustrated in Figure 8, SF can select an appropriate RAN and UE based on the information of the first sensing task (for example, the identity or location information of the target sensing object or the target sensing area), and request the RAN sensing node or the RAN serving the UE sensing node to assist in identifying the UE(s) affected by the first sensing task. The specific process is as follows.

Step 801, SF sends a UE ID acquisition request to RAN, the UE ID acquisition request carrying the ID of the target UE (target UE ID) and AoI. Additionally, although not illustrated in Figure 8, the UE ID acquisition request can also carry the first location of the target sensing object.

Specifically, according to different sensing modes determined based on the sensing request, the UE ID acquisition request message can be sent to different RANs as follows.
a) For a sensing mode of RAN self-sending and self-receiving or a sensing mode of multiple RANs collaborating, SF needs to send a UE ID acquisition request to each of one or more RAN sensing nodes participating in the first sensing task; that is, each RAN sensing node among the one or more RAN sensing nodes is taken as a first network device. It should be understood that in Figure 8, for the sake of simplicity, the scenario where only one RAN sensing node is taken as the first network device is illustrated. In actual processing, there can be multiple RANs in Figure 8, and each RAN performs the same processing, so this example will not list them one by one.
b) For a sensing mode of UE self-sending and self-receiving or multiple UEs collaborating, SF needs to determine one or more UE sensing nodes participating in the first sensing task, and send a UE ID acquisition request to one or more RANs serving the one or more UE sensing nodes; that is, each RAN node among one or more RAN nodes serving the one or more UE sensing nodes is taken as a first network device. It should be understood that in Figure 8, for the sake of simplicity, the scenario where only one RAN is taken as the first network device is illustrated. In actual processing, there can be multiple RANs in Figure 8, and each RAN performs the same processing, so this example will not list them one by one.
c) For a sensing mode of UE and RAN collaboration, SF not only needs to send a UE ID acquisition request to a RAN node participating in the first sensing task, but also needs to send the UE ID acquisition request to a RAN serving the UE node participating in the sensing task. It should be understood that in Figure 8, for the sake of simplicity, the scenario where only one RAN is taken as the first network device is illustrated. The RAN illustrated in Figure 8 can be a RAN sensing node or a RAN serving the UE sensing node, and this example will not list the processing of each RAN one by one.

The UE ID acquisition request is the first message in the aforementioned embodiments. For an object-oriented sensing task, the UE ID acquisition request may contain the target UE ID, which can also be replaced by the location information of the target object. For an area-oriented sensing, the UE ID acquisition request may contain AoI, that is, the target sensing area of the first sensing task. The aforementioned UE ID acquisition request can be sent to RAN through AMF, or it can be sent directly to RAN by SF.

Step 802, RAN sends a UE ID acquisition response to SF. The UE ID acquisition response can carry the Affected UE ID list.

Specifically, after receiving the UE ID acquisition request message, RAN can return IDs of all non-target UEs (non-target UE IDs) it is currently serving (excluding the target UE) to SF, or it can return IDs of all non-target UEs (non-target UE IDs) that are in the same target sensing area as the target UE or target object and different from the target UE or the target object to SF, or it can send IDs of all UEs (UE ID) within the target sensing area to SF. The UE ID acquisition response can be the second message in the aforementioned embodiments, which can be sent to SF through AMF or sent directly to SF.

It should be noted that the scenario illustrated in Figure 8 also includes UE, which can refer to the UE sensing node. The number of UE sensing nodes illustrated in Figure 8 can be multiple, and for the sake of simplicity, the interaction of UE sensing nodes will not be illustrated in Figure 8.

Compared with the example where AMF obtains the Affected UE ID list, the advantage of this example lies in that, RAN obtains the Affected UE ID list, it can more accurately identify non-target UEs that may be affected, reducing the probability of misidentify.

In some possible implementations, after the second network device receives the second message, it can further request sensing authorization from one or more electronic devices within the target sensing area, that is, request authorization for the first sensing task from one or more electronic devices within the target sensing area (or authorize the first sensing task). Exemplarily, the request for sensing authorization from one or more electronic devices (for example, referred to as affected UEs) within the target sensing area can be implemented in three methods: confirming authorization through a subscription message, directly confirming authorization by an affected UE, and secondary authorization.

Optionally, the request for sensing authorization from one or more electronic devices (for example, referred to as affected UEs) within the target sensing area is to confirm authorization through a subscription message.

After the second network device receives the second message, the method further includes: the second network device obtaining a subscription message of the second device, the second device being one of one or more electronic devices within the target sensing area; the second network device determining whether the second device authorizes the first sensing task based on the subscription message of the second device.

The second network device can take each electronic device within the target sensing area as the second device respectively, and perform the same processing for each second device respectively, the processing will not be repeated here. In the following explanation, the second device referred to can be any one device within the aforementioned target sensing area.

The second network device obtaining the subscription message of the second device can refer to: the second network device obtaining the subscription message of the second device from subscription messages of all candidate devices stored locally, based on identity information of the second device; or, the second network device obtaining the subscription message of the second device from a network element that stores subscription messages, based on the identity information of the second device. The network element that stores subscription messages can be UDM or other core network elements, and will not be repeated here.

The second network device determining whether the second device authorizes the first sensing task based on the subscription message of the second device can include the following. The second network device determines whether the second device authorizes the first sensing task based on the subscription message of the second device, and at least one of: the identity of the first sensing task, the content of the first sensing task, an initiator of the first sensing task, a receiver designated by the sensing request, and the information of the sensing mode of the first sensing task. For example, if the identity of the first sensing task is included in identity of sensing tasks allowed for authorization in the subscription message of the second device, the second network device can determine that the second device allows authorization of the first sensing task. Alternatively, if the content of the first sensing task is included in the content of sensing tasks allowed for authorization in the subscription message of the second device, the second network device can determine that the second device allows authorization of the first sensing task. Again, if identity of the initiator of the first sensing task is included in the identity of the initiator of sensing tasks allowed for authorization in the subscription message of the second device, the second network device can determine that the second device allows authorization of the first sensing task. Here, we do not exhaustively enumerate all possible methods for determining whether the second device allows authorization for the first sensing task. The difference between such confirmation through the subscription message and the related art is that it is necessary to first determine the affected UE (that is, the device within the target area), and then determine the authorization for the first sensing task based on the subscription message of the affected UE, rather than randomly using the subscription message of any UE. The way to obtain the subscription message can use the existing process, and will not be described in detail here.

Optionally, the request for sensing authorization from one or more electronic devices (for example, referred to as affected UEs) within the target sensing area refers to directly confirm authorization by the affected UE.

The aforementioned authorization from each electronic device within the target sensing area can be classified into the following three different dimensions: authorization for the initiator of the sensing task, authorization for the sensing content, and authorization for assisted sensing.

The authorization for the initiator of the sensing task refers to the authorization for the initiating device of the sensing task, can refer to whether a certain UE (that is, any one device within the target sensing area) allows a sensing task initiated by a certain AF, UE, RAN, core network element, etc. The authorization for the sensing content refers to whether a certain UE (that is, any one device within the target sensing area) allows a certain type of sensing task or a sensing task with a certain sensing precision to be performed on it. The authorization for assisted sensing refers to whether a certain UE (that is, any one device within the target sensing area) is willing to assist other UEs, RANs, and other sensing nodes in sensing the sensing target.

After the second network device receives the second message, the method further includes the following. The second network device sending a fourth message to the second device. The fourth message is used to request the second device to authorize the first sensing task, the second device is one of the one or more electronic devices within the target sensing area. The second network device receives a response message for the fourth message sent by the second device, the response message for the fourth message indicates whether the second device authorizes the first sensing task.

The second network device can take each electronic device within the target sensing area as the second device respectively, and perform the same processing for each second device, without listing them one by one. In the following, the second device referred to can be any one device within the aforementioned target sensing area.

The second network device sending the fourth message to the second device can refer to: the second network device sending the fourth message to the second device through a first core network device and an access network device corresponding to the second device. Correspondingly, the second network device receiving the response message for the fourth message sent by the second device can refer to: the second network device receiving the response message for the fourth message sent by the second device through the first core network device, which is forwarded by the access network device corresponding to the second device. The first core network device can include AMF, or it can be any other core network device, and will not be listed here.

Alternatively, the second network device sending the fourth message to the second device can refer to: the second network device sending the fourth message to the second device through the access network device corresponding to the second device. Correspondingly, the second network device receiving the response message for the fourth message sent by the second device can refer to: the second network device receiving the response message for the fourth message sent by the second device through the access network device corresponding to the second device.

The fourth message can be referred to as a sensing authorization request. The response message for the fourth message can be referred to as a sensing authorization response.

The fourth message carries at least one of the following: identity information of the second device, identity of the first sensing task, content of the first sensing task, identity information of an initiator of the first sensing task, identity information of a receiver designated by the sensing request, information of a sensing mode of the first sensing task, information of sensing measurement data required by the first sensing task. The identity information of the second device can refer to the ID of the second device, and the detailed explanation of the ID is the same as the aforementioned embodiment, and will not be repeated.

The content of the first sensing task includes at least one of the following: the type of the first sensing task, requirements of the first sensing task, an execution device of the first sensing task. The type of the first sensing task can include at least one of the following: dynamic map, vehicle speed detection, vehicle tracking, emergency event notification, vehicle audit, etc. It should be understood that the above is only an exemplary illustration, and the type of the first sensing task can also be other types, which will not be listed here.

The requirements of the first sensing task can also be referred to as service requirements of the first sensing task, and can include at least one of the following: the sensing resolution of the first sensing task, the sensing precision of the first sensing task, the frame rate of the first sensing task, the duration of the first sensing task, the delay of the first sensing task, the information of the first sensing task. The information of the first sensing task is the same as the aforementioned embodiment, that is, it can include information about the target sensing object (for example, the information about the sensed target) or information about the target sensing area (also referred to as the target area information), and will not be repeated here.

Information of the execution device of the first sensing task can include: the identity information of a sensing node that executes the first sensing task, and the explanation of the identity information is the same as the aforementioned embodiment, and will not be repeated. The sensing node of the first sensing task can include: access network device sensing node and/or terminal device sensing node, and the explanation of the access network device sensing node and the terminal device sensing node is the same as the aforementioned embodiment, and will not be repeated. It should be understood that the execution device of the first sensing task can be determined by the second network device based on the aforementioned sensing request, and the specific determination method has been described in detail in the aforementioned embodiment, and will not be repeated; or, the execution device of the first sensing task can be carried in the sensing request, and this embodiment does not limit this.

The information of the sensing mode includes at least one of the following: a mode of sensing executed by an access network device, a mode of sensing executed by a terminal device, a mode of sensing collaboratively executed by an access network device and a terminal device, the second device as a sender of the sensing signal, the second device as a receiver of the sensing signal.

Exemplarily, the information of the sensing mode of the first sensing task can include one of the following: a mode of sensing executed by an access network device, a mode of sensing executed by a terminal device, a mode of sensing collaboratively executed by an access network device and a terminal device. The detailed explanation of the above various modes is the same as the aforementioned embodiment, and will not be repeated. Further, the information of the sensing mode of the first sensing task can include at least one of the following: the second device as a sender of the sensing signal, the second device as a receiver of the sensing signal. That is to say, in the mode of sensing executed by a terminal device or the mode of sensing collaboratively executed by an access network device and a terminal device, the second device can be a terminal device that sends the sensing signal and a terminal device that receives the sensing signal, or the second device can only be a terminal device that sends the sensing signal or a terminal device that receives the sensing signal. Whether the second device is the sender and/or receiver of the sensing signal is related to the aforementioned sensing mode, the location of the second device, the location of the target sensing object, etc., and will not be limited here.

The receiver designated by the sensing request can refer to the consumer of the first sensing task who finally obtains the sensing result. It should be understood that the receiver designated by the aforementioned sensing request can be carried in the sensing request.

The identity information of the initiator of the first sensing task can specifically refer to the identity information of the first device, and the detailed explanation of the first device is the same as the aforementioned embodiment, and will not be repeated. The receiver designated by the sensing request and the initiator of the first sensing task can be the same device, or they can be different devices, both of which are within the scope of protection of this embodiment, and all possibilities will not be listed here. It should be noted that if not specifically stated otherwise below, the initiator of the first sensing task and the first device have the same meaning, and will not be repeated.

Exemplarily, if the fourth message is used to request the second device to authorize the initiator of the first sensing task, the fourth message can carry the identity information of the initiator of the first sensing task. Further, the fourth message can also carry at least one of the following: the identity of the second device, the identity of the first sensing task, the content of the first sensing task, the receiver designated by the sensing request. Exemplarily, if the fourth message is used to request the second device to authorize the content of the first sensing task, the fourth message can carry the content of the first sensing task. Further, the fourth message can also carry at least one of the following: the identity information of the second device, the identity of the first sensing task, the identity information of the initiator of the first sensing task, the identity information of the receiver designated by the sensing request. Exemplarily, if the fourth message is used to request the second device to authorize assisting sensing of the first sensing task, the fourth message can carry the information of the sensing mode of the first sensing task. The information of the sensing mode can include at least one of the following: the second device as the sender of the sensing signal, the second device as the receiver of the sensing signal, and the information of the sensing mode can further include one of the following: a mode of sensing executed by an access network device, a mode of sensing executed by a terminal device, a mode of sensing collaboratively executed by an access network device and a terminal device. Further, the fourth message can also carry at least one of the following: the identity information of the second device, the identity of the first sensing task, the content of the first sensing task, the identity information of the initiator of the first sensing task, the identity information of the receiver designated by the sensing request.

The response message for the fourth message can be used to indicate that the second device does not authorize the first sensing task, or to indicate that the second device authorizes the first sensing task. The specific content indicated by the response message for the fourth message is related to the authorization content requested by the aforementioned fourth message. For example, if the fourth message is used to request the second device to authorize the initiator of the first sensing task, the response message for the fourth message can be used to indicate that the second device does not authorize the initiator of the first sensing task, or to indicate that the second device authorizes the initiator of the first sensing task. For example, if the fourth message is used to request the second device to authorize the content of the first sensing task, the response message for the fourth message can be used to indicate that the second device does not authorize the content of the first sensing task, or to indicate that the second device authorizes the content of the first sensing task. For example, if the fourth message is used to request the second device to authorize assisted sensing of the first sensing task, the response message for the fourth message can be used to indicate that the second device does not authorize assisted sensing for the first sensing task, or to indicate that the second device authorizes assisted sensing for the first sensing task.

Furthermore, when the response message for the fourth message indicates that the second device does not authorize the first sensing task, the response message for the fourth message can carry a rejection cause of the second device. Exemplarily, the rejection cause of the second device can include at least one of the following: rejecting to authorize the content of the first sensing task, rejecting to authorize the initiator of the first sensing task to sense the second device, rejecting assisted sensing for the first sensing task, etc. The aforementioned rejection cause of the second device can also be related to the specific authorization content requested by the fourth message. For example, if the fourth message is used to request the second device to authorize the initiator of the first sensing task, the response message for the fourth message can be used to indicate that the second device does not authorize the initiator of the first sensing task, and the rejection cause is that the current sensing initiator is not allowed to sense the second device. For example, if the fourth message is used to request the second device to authorize the content of the first sensing task, the response message for the fourth message can be used to indicate that the second device does not authorize the content of the first sensing task, and the rejection cause can be rejecting to authorize the type of sensing task, rejecting to authorize the requirements of the sensing task, etc. For example, if the fourth message is used to request the second device to authorize assisted sensing for the first sensing task, the response message for the fourth message can be used to indicate that the second device does not authorize assisted sensing for the first sensing task, and the rejection cause can be rejecting to assist in the first sensing task. It should be understood that the above is only an exemplary illustration, and there can be more rejection causes in actual processing, which will not be listed here.

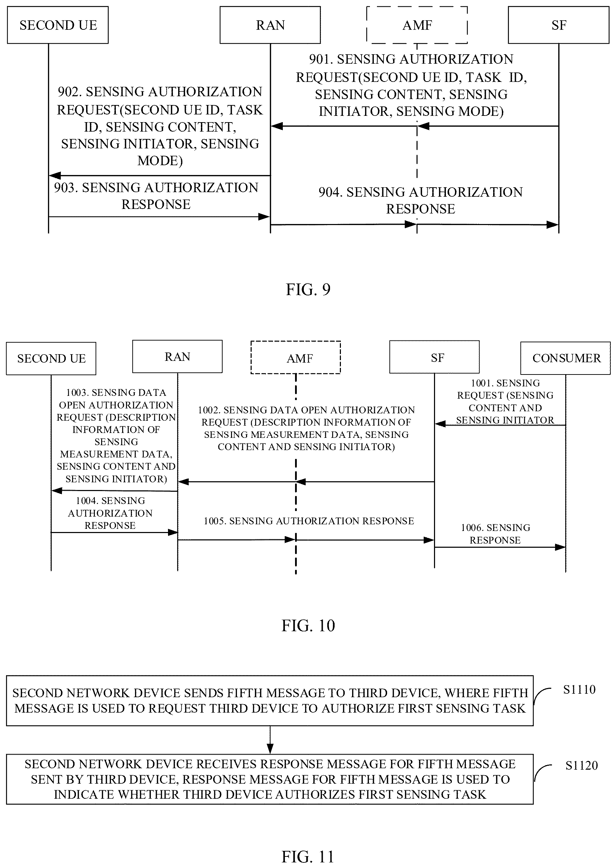

Combining Figure 9, the solution provided by the aforementioned implementation is exemplarily illustrated. SF obtains the affected UE ID list, for example, the affected UE ID list includes non-target UE ID, and SF requests sensing authorization from non-target UEs as follows: authorization from non-target UEs can be done in the following three manners: confirming authorization through subscription messages, directly confirming with non-target UEs, and secondary authorization. The difference between the confirmation through subscription messages and the related art is that it is necessary to obtain the subscription message of the non-target UE to authorize the sensing task, rather than simply checking the subscription message of the target UE. The way to obtain the subscription message can use the existing process, so it will not be described in detail here.

With respect to the privacy protection of non-target UEs, the sensing task can be authorized in the following three dimensions: authorization for the initiator of the sensing task, that is, whether a certain UE allows a certain AF, UE, RAN, core network element, etc. to initiate a sensing task; authorization for the sensing content, that is, whether a certain UE allows a certain type of sensing task or a sensing task with a certain sensing precision to be performed on the certain UE; authorization for assisted sensing, that is, whether a certain UE is willing to assist other UEs, RANs, and other sensing nodes in sensing the sensing target.

As illustrated in Figure 9, when SF requests authorization from non-target UEs, it can inquire about non-target UEs from the above three dimensions. For example, the second network device is SF, any one non-target UE is the second device, the fourth message is the sensing authorization request, the response message for the fourth message is the sensing authorization response, the access network device corresponding to the second device is RAN, and the second device is exemplarily the second UE in Figure 9, the specific process is as follows.

Step 901, SF sends a sensing authorization request to RAN serving the second UE through AMF or directly to the RAN. The request message can contain at least one of the following: the ID of the second UE, the identity of the first sensing task (that is, the Task ID in Figure 9), the content of the first sensing task (that is, the sensing content in Figure 9), the ID of the initiator of the first sensing task (that is, the sensing initiator in Figure 9), etc. The ID of the second UE is the identity information of the second UE that needs to authorize the sensing task, the content of the first sensing task includes the type of the first sensing task, the sensing precision, resolution, duration, etc. of the first sensing task, and the initiator of the first sensing task is the initiator of the current sensing task and can also be the consumer of the sensing task who will finally obtain the sensing result, it can be the aforementioned first UE ID, AF ID, or the identity of a core network element, etc.

Step 902, RAN forwards the sensing authorization request received to the non-sensing target UE (that is, the second UE) indicated by the second UE ID in the message.

Step 903, after receiving the sensing authorization request, the second UE informs the network side whether it agrees to authorize the current first sensing task through the sensing authorization response. The sensing authorization response contains an indication of whether to authorize, and when not authorized, it can also contain the reason for authorization failure, such as not allowing a sensing content with a certain type of service, sensing service requirements, etc., or not allowing the current sensing initiator to sense the second UE, etc.

Step 904, RAN forwards the sensing authorization response received to SF through AMF or directly sends it to SF.

It should be understood that the process of whether the second UE is willing to assist in sensing is similar to the above process, and the difference is that the sensing assistance request message, in addition to the second UE ID, Task ID, sensing content, and sensing initiator, can also include the sensing mode (that is, the aforementioned information of the sensing mode of the first sensing task) illustrated in Figure 9, such as multi-UE collaboration mode, UE self-sending and self-receiving mode, UE-assisted RAN mode, and whether the second UE is the sender, the receiver, or both the sender and the receiver of the sensing signal.

Requesting sensing authorization from non-target UEs avoids the leakage of privacy data of non-target UEs. Compared with authorization based on subscription messages, directly requesting authorization from UEs can obtain the latest user permission, meeting the sensing permission degree of users which is dynamically changes in different scenarios, different locations, and at different times. It avoids the problem of privacy leakage caused by the untimely update of subscription messages when user sensing permission changes. In addition, the willingness of non-target UEs to assist in sensing also varies in different scenarios. For example, when carrying a large amount of service, there are not enough resources to allocate to sensing tasks. Directly requesting assisted sensing authorization from non-target UEs avoids the problem of non-target UEs carrying other services being preempted by sensing tasks. In addition, more refined sensing authorization granularity can make users' authorization decisions more flexible.

Optionally, the request for sensing authorization from one or more electronic devices (for example, referred to as Affected UEs) within the target sensing area is secondary authorization.

Before the second network device sends the fourth message to the second device, the method further includes: the second network device selecting the second device that satisfies a preset condition from the one or more electronic devices, where the preset condition includes that sensing measurement data obtained by executing the second sensing task can be reused by the first sensing task.

For example, the second network device selecting the second device that satisfies the preset condition from the one or more electronic devices can refer to: the second network device determining the i-th device that executes another sensing task(s) from the one or more electronic devices, taking the other sensing task as the second sensing task, obtaining sensing measurement data which is obtained by the i-th device executing the second sensing task, determining whether the preset condition that the sensing measurement data obtained by executing the second sensing task can be reused by the first sensing task is satisfied; if the preset condition is satisfied, the i-th device is taken as the second device; i is a positive integer; if the preset condition is not satisfied, continue to determine the (i+1)-th device that executes another sensing task from the one or more electronic devices, and continue the above processing, which will not be repeated here. Wherein, the second sensing task can refer to another sensing task executed by the second device in the past, or another sensing task currently being executed by the second device, as long as the second sensing task is different from the first sensing task, it is within the scope of protection of this embodiment; in addition, the second device executing the other sensing task can refer to the second device being the sender of the sensing signal for the other sensing task, and/or the second device being the receiver of the sensing signal for the other sensing task.

Determination of whether the sensing measurement data obtained by executing the second sensing task can be reused by the first sensing task can include: determining whether information of the sensing measurement data obtained by executing the second sensing task matches information of the sensing measurement data required by the first sensing task.

The information of the sensing measurement data required by the first sensing task includes at least one of the following: the category of the sensing measurement data required by the first sensing task, the precision of the sensing measurement data required by the first sensing task, the size of the sensing measurement data required by the first sensing task. That is to say, the determination of whether the sensing measurement data obtained by executing the second sensing task can be reused by the first sensing task can include at least one of the following: determining whether the category of the sensing measurement data obtained by executing the second sensing task is the same as the category of the sensing measurement data required by the first sensing task; determining whether the precision of the sensing measurement data obtained by executing the second sensing task is the same as the precision of the sensing measurement data required by the first sensing task; determining whether the size of the sensing measurement data obtained by executing the second sensing task is the same as the size of the sensing measurement data required by the first sensing task.

It should be noted that the number of second devices selected based on the above processing method can be one or more, which is within the scope of protection of this embodiment. In order to describe simply, the second device in the following text can refer to any one of the one or more second devices that satisfy the preset condition.

The fourth message is used to request the second device to authorize the first sensing task to reuse the sensing measurement data obtained by executing the second sensing task; the response message for the fourth message indicates whether the second device authorizes the first sensing task to reuse the sensing measurement data obtained by executing the second sensing task.

In this case, the aforementioned fourth message at least carries the information of the sensing measurement data required by the first sensing task. Here, the information of the sensing measurement data required by the first sensing task is the same as the aforementioned embodiment, and will not be repeated. Exemplarily, in addition to the information of the sensing measurement data required by the first sensing task, the fourth message can also carry at least one of the following: the identity information of the second device, the identity of the first sensing task, the content of the first sensing task, the identity information of the initiator of the first sensing task, the identity information of the receiver designated by the sensing request, the information of the sensing mode of the first sensing task. The identity information of the receiver designated by the sensing request can also be the identity of the data consumer. The detailed explanation of the above content is the same as the aforementioned embodiment, so it will not be repeated.

The response message for the fourth message indicates that the second device does not authorize the first sensing task to reuse the sensing measurement data obtained by executing the second sensing task, or to indicate that the second device authorizes the first sensing task to reuse the sensing measurement data obtained by executing the second sensing task.

After the second network device receives the response message for the fourth message sent by the second device, the method further includes: when the response message for the fourth message indicates that the second device authorizes the first sensing task to reuse the sensing measurement data obtained by executing the second sensing task, the second network device obtains the sensing result of the first sensing task based on the sensing measurement data obtained by the second device executing the second sensing task, and sends the sensing result of the first sensing task to the receiver designated by the sensing request through the second communication unit. Exemplarily, sending the sensing result of the first sensing task to the receiver designated by the sensing request can refer to the second network device sending a sensing response to the receiver designated by the sensing request, and the sensing response carrying the sensing result of the first sensing task.

In addition, when the response message for the fourth message indicates that the second device does not authorize the first sensing task to reuse the sensing measurement data obtained by executing the second sensing task, the response message for the fourth message can also carry the rejection cause of the second device. The rejection cause can be similar to the aforementioned embodiment, so it will not be repeated here. When the response message for the fourth message indicates that the second device does not authorize the first sensing task to reuse the sensing measurement data obtained by executing the second sensing task, the aforementioned second network device can also send a sensing response to the receiver designated by the sensing request, and the sensing response indicates that the first sensing task is not authorized to use the sensing measurement data obtained by other sensing tasks; or, the aforementioned second network device can also control the re-execution of sensing measurement to obtain new sensing measurement data, and the subsequent processing will not be repeated.

The fourth message can be referred to as a sensing data open authorization request. The response message for the fourth message can be referred to as a sensing authorization response.

Combining Figure 10, the solution provided by the aforementioned implementation is exemplarily illustrated. In Figure 10, for example, the second network device is SF, any one non-target UE is the second device, the fourth message is the sensing data open authorization request, the response message for the fourth message is the sensing authorization response, the access network device corresponding to the second device is RAN, and the second device is exemplarily the second UE in Figure 10. After SF receives the sensing request (which can be the sensing request sent by the aforementioned initiator of the first sensing task), the SF founds that the same or similar sensing task (that is, the second sensing task) has been executed in the past or is currently executed, and the sensing data collected by executing the second sensing task can be reused for the current sensing task (that is, the first sensing task), and it is necessary to request secondary authorization from the second UE to which the sensing measurement data belongs(that is, the second UE). The ID of the second UE in this scenario can be the second UE ID recorded in SF, or it can be the ID of one or more second UEs among one or more electronic devices within the target sensing area that SF requests RAN, AMF and other nodes to assist in obtaining. The specific process is as follows.

Step 1001, SF receives a sensing request, the sensing request at least including sensing content and sensing initiator.

In Figure 10, the sending device of the sensing request is represented as consumer, which can be the receiver designated by the sensing request and/or the initiator of the first sensing task. Exemplarily, the initiator of the first sensing task can include the following: AF, the first UE, the RAN initiating the first sensing task, the core network element initiating the first sensing task, etc.

The sensing request can contain the sensing content and the identity information of the sensing initiator. The sensing content is the content of the first sensing task in the aforementioned embodiment, and can include at least one of the following: the service type of the first sensing task (such as dynamic map, vehicle speed detection, vehicle tracking, emergency event notification, vehicle audit), the requirement of the first sensing task (sensing resolution, sensing precision, frame rate, duration, target area information, delay, information of a sensed target such as vehicle type, vehicle identity, location information), information of the designated sensing node (that is, information of the aforementioned execution device of the first sensing task, such as a UE sensing node), etc.; the target area information (that is, the target sensing area) and information of the sensed target (that is, the identity information of the target sensing object and/or the first location of the target sensing object) can also be included in the information of the first sensing task, or can be included in the requirement of the first sensing task, and there is no limitation here.

Step 1002, SF sends a sensing data open authorization request to the RAN corresponding to the second UE.

Specifically, SF determines that the sensing measurement data obtained by executing the same or similar sensing task (second sensing task) in the past or currently can be reused (that is, determine whether it meets the aforementioned preset condition). At this time, SF still needs to confirm with the owner of the sensing measurement data, for example, the non-sensing target UE (that is, the second UE), for authorization. SF needs to send a sensing data open authorization request to the aforementioned second UE, and the request message contains the second UE ID, Task ID (that is, the identity of the first sensing task), the description information of the sensing measurement data (that is, the information of the sensing measurement data), the sensing content (that is, the content of the first sensing task) and the sensing initiator (that is, the ID of the initiator of the first sensing task) or the identity information of the entity to whom data is opened. The description information of the sensing measurement data is used to inform the UE of the category, precision, size, etc. of the data to be opened; the sensing content includes the type, precision, resolution, duration, etc. of the sensing task, which are used to inform the UE of the purpose of opening the data; and the sensing initiator or the entity to whom data is opened is used to inform the UE which functional entity is using its sensing measurement data. The sensing data open authorization request can be sent to RAN through AMF or directly to RAN, and the RAN referred to here can be the RAN corresponding to the second UE.

Step 1003, RAN forwards the received sensing data open authorization request to the second UE.

Step 1004, after receiving the sensing authorization request, the second UE informs, through the sensing authorization response, the network side whether it agrees to authorize the first sensing task to reuse the sensing measurement data obtained by executing the second sensing task. The sensing authorization response contains an indication of whether to authorize the first sensing task to reuse the sensing measurement data obtained by executing the second sensing task, and when not authorized, it can also contain the reason for the authorization failure, such as not allowing the sensing content such as a certain type of service, a certain requirement of a sensing service, etc. or not allowing the current sensing initiator to sense, etc.

Step 1005, RAN forwards the sensing authorization response received to SF through AMF or directly sends it to SF.

Step 1006, SF sends a sensing response to the consumer, and the sensing response can include the sensing result calculated from the sensing measurement data.

Exemplarily, if SF obtains the authorization from the second UE, it calculates the sensing result based on the aforementioned sensing measurement data and sends it to the initiator of the sensing task. If SF does not obtain the authorization from the second UE, it can indicate in the response message that the sensing task is not authorized, or it can reexecute sensing measurement to obtain new data.

This example can perform secondary authorization when it is necessary to reuse sensing measurement data, thereby avoiding the problem of an unauthorized third party obtaining user-measured sensing measurement data for unknown purposes, and eliminating the possibility of the unauthorized third party obtaining the sensing result by sending the same sensing request as the authorized sensing task initiator.

It can be seen that by adopting the solution provided in the disclosure, it is possible to identify each electronic device within the target sensing area. Since the target sensing area is related to the first sensing task, identifying each electronic device within the target sensing area can identify the electronic devices affected by the sensing task. This avoids the problem in the related art where only the target sensing object designated by the sensing task is identified for authorization, and other electronic devices affected by the sensing task cannot be protected for privacy. It ensures the privacy security of the electronic devices affected by the sensing task within the target sensing area.

Figure 11 is a schematic flowchart of a communication method according to another embodiment of the disclosure. The method includes at least part of the following.

S1110, the second network device sends a fifth message to the third device, where the fifth message is used to request the third device to authorize the first sensing task.

S1120, the second network device receives a response message for the fifth message sent by the third device, the response message for the fifth message is used to indicate whether the third device authorizes the first sensing task.

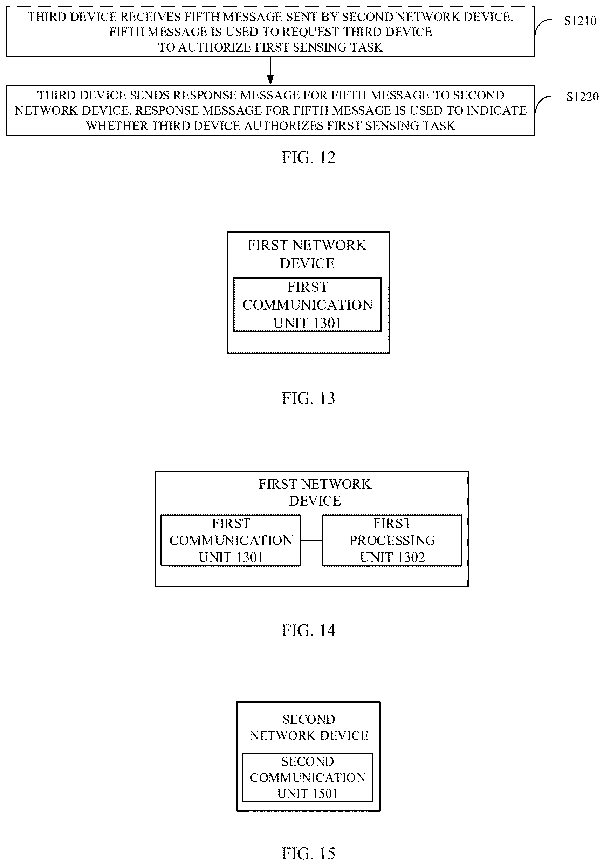

Figure 12 is a schematic flowchart of a communication method according to another embodiment of the disclosure. The method includes at least part of the following.

S1210, the third device receives a fifth message sent by the second network device, the fifth message is used to request the third device to authorize the first sensing task.

S 1220, the third device sends a response message for the fifth message to the second network device, the response message for the fifth message is used to indicate whether the third device authorizes the first sensing task.

The second network device is a second core network device with a sensing capability. The detailed explanation of the second core network device with a sensing capability is the same as the aforementioned embodiment, and will not be repeated.

Before the second network device sends the fifth message to the third device, the method can further include: the second network device receiving a sensing request.

The second network device receiving the sensing request can be: the second network device receiving the sensing request sent by a first device; or, the second network device receiving the sensing request sent by the first device through a first network device. Here, the first network device can be a first core network device or a second access network device. The first core network device can refer to AMF, or it can be any other core network device that can implement the solution provided in this embodiment, and all possibilities are within the scope of protection of this embodiment, and will not be listed here.

The aforementioned first device can be one of the following: a first terminal device, a first access network device, a first server, a third core network device. The first device can be a device that initiates the sensing, that is, the first device is the initiator of the first sensing task. The first terminal device can be the terminal device that initiates the sensing; the first access network device can be the access network device that initiates the sensing; the first server can be the server that initiates the sensing, and the server can be an application function (AF) network element or any other network element with service functions, and will not be listed here; the third core network device can be the core network device that initiates the sensing, and it should be understood that any core network device with the capability to initiate sensing is within the scope of protection of this embodiment, and all possible core network devices than can initiate sensing will not be limited here.

Regarding the specific way in which the second network device directly receives a sensing request sent by the first device or the second network device receives the sensing request sent by the first device through the first network device, it has been described in detail in the aforementioned embodiments, and will not be repeated here.

The aforementioned sensing request can carry information of the first sensing task, and the detailed explanation of the information of the first sensing task is the same as the aforementioned embodiments of the communication method, and will not be repeated. The sensing request can also include at least one of the following: the identity of the first sensing task, the content of the first sensing task, the identity information of the initiator of the first sensing task, the identity information of the receiver designated by the sensing request, the information of the sensing mode of the first sensing task, the information of the sensing measurement data required by the first sensing task.

In some possible implementations, before sending the fifth message to the third device, the method further includes: the second network device selecting the third device that executes the first sensing task based on the sensing mode of the first sensing task and the target sensing area of the first sensing task.

The sensing mode of the first sensing task can be carried in the information of the sensing mode of the first sensing task in the aforementioned sensing request. The information of the sensing mode of the first sensing task can include one of the following: a mode of sensing executed by an access network device, a mode of sensing executed by a terminal device, a mode of sensing collaboratively executed by an access network device and a terminal device. The detailed explanation of the above various sensing modes is the same as the aforementioned embodiment, and will not be repeated.

The determination of the target sensing area of the first sensing task can include: when the sensing request carries the information of the target sensing object of the first sensing task, determining the second location of the target sensing object based on the information of the target sensing object; determining the target sensing area based on the second location of the target sensing object. For example, when the information of the target sensing object is the identity information of the target sensing object, the second location of the target sensing object can be determined based on the UE context of all UEs locally stored and the identity information of the target sensing object, and at least one of the following can be determined based on the second location of the target sensing object: a target sensing area under RA, a target sensing area under TA, a target sensing area under a cell, a target sensing area under a sector, and a target sensing area under a specified radius.

Alternatively, the determination of the target sensing area of the first sensing task can include: when the sensing request carries the target sensing area of the first sensing task, directly extracting the target sensing area.

The second network device selecting the third device that executes the first sensing task based on the sensing mode of the first sensing task and the target sensing area of the first sensing task can refer to: the second network device determining one or more candidate terminal devices and/or one or more candidate access network devices that can execute the first sensing task within the target sensing area of the first sensing task based on the sensing mode of the first sensing task, and selecting the third device that executes the first sensing task from the one or more candidate terminal devices and/or one or more candidate access network devices. That is, by adopting the solution provided in this example, it is possible to select a device that satisfies the sensing mode of the first sensing task and is within the target sensing area as the aforementioned third device. It should be understood that the number of third devices can be one or more, and the type of the third device can include access network devices and terminal devices. The same processing will be performed for each third device, which will not be repeated here. The following example will illustrate with any one of the third devices, that is, if not specifically stated otherwise, the third device referred to below can be any one of one or more third devices.

Regarding the aforementioned third device, there can be the following three different authorization dimensions: authorization for the initiator of the sensing task, authorization for the sensing content, authorization for assisted sensing. The authorization for the initiator of the sensing task is the authorization for the initiating device of the sensing task, can refer to whether the third device allows a sensing task initiated by a certain AF, UE, RAN, core network element, etc. The authorization for the sensing content is whether the third device allows a certain type of sensing task or a sensing task with a certain sensing precision to be performed on it. The authorization for assisted sensing is whether the third device is willing to assist other UEs, RANs, and other sensing nodes in sensing the sensing target.

Optionally, the third device is a third access network device.

The second network device sending the fifth message to the third device can refer to: the second network device sending the fifth message to the third access network device through the first core network device. Correspondingly, the second network device receiving a response message for the fifth message sent by the third device can refer to: the second network device receiving the response message for the fifth message sent by the third access network device through the first core network device. The first core network device can include AMF, or it can be any other core network device, and is not limited here. Alternatively, the second network device sending the fifth message to the third device can refer to: the second network device sending the fifth message to the third access network device. Correspondingly, the second network device receiving the response message for the fifth message sent by the third device can refer to: the second network device receiving the response message for the fifth message sent by the third access network device. That is to say, in this embodiment, in addition to the terminal device assisted sensing authorization, the sensing authorization request (that is, the fifth message) can also be used for requesting authorization from the access network device sensing node. Different from the terminal device assisted sensing authorization, the sensing authorization request (that is, the fifth message) does not need to be sent to the terminal side, but only needs to be sent to the RAN node participating in the sensing task. The authorization from the access network device sensing node is mainly applied to multiple access network device assistance, access network device self-sending and self-receiving, and access network device and terminal device assisted sensing.

Optionally, the third device is a second terminal device.

The second network device sending the fifth message to the third device includes: the second network device sending the fifth message to the second terminal device through the fourth access network device, the fourth access network device serving the second terminal device. The second network device receiving the response message for the fifth message sent by the third device includes: the second network device receiving the response message for the fifth message sent by the second terminal device through the fourth access network device.

Optionally, the fifth message can be referred to as a sensing authorization request. The response message for the fifth message can be referred to as a sensing authorization response.

The fifth message carries at least one of the following: the identity information of the third device, the identity of the first sensing task, the content of the first sensing task, the identity information of the initiator of the first sensing task, the identity information of the receiver designated by the sensing request, the information of the sensing mode of the first sensing task, the information of the sensing measurement data required by the first sensing task.

The identity information of the third device can refer to the network identifier and/or ID of the third device. The detailed explanation of the network identifier and ID is the same as the aforementioned embodiment, and will not be repeated.

The content of the first sensing task includes at least one of the following: the type of the first sensing task, the requirement of the first sensing task, the execution device of the first sensing task. The detailed explanation of the type, requirement, and execution device of the first sensing task is the same as the aforementioned embodiment, and will not be repeated.

The information of the sensing mode includes at least one of the following: a mode of sensing executed by an access network device, a mode of sensing executed by a terminal device, a mode of sensing collaboratively executed by an access network device and a terminal device, the third device as the sender of the sensing signal, the third device as the receiver of the sensing signal.

Exemplarily, the information of the sensing mode of the first sensing task can include one of the following: a mode of sensing executed by an access network device, a mode of sensing executed by a terminal device, a mode of sensing collaboratively executed by an access network device and a terminal device. The detailed explanation of the above various modes is the same as the aforementioned embodiment, and will not be repeated. Further, the information of the sensing mode of the first sensing task can include at least one of the following: the third device as the sender of the sensing signal, the third device as the receiver of the sensing signal. That is to say, under the mode of sensing executed by a terminal device or the mode of sensing collaboratively executed by an access network device and a terminal device, the third device can be a terminal device that sends the sensing signal and a terminal device that receives the sensing signal, or the third device is a terminal device that sends the sensing signal or a terminal device that receives the sensing signal. The determination of whether the third device is the sender and/or receiver of the sensing signal is related to the aforementioned sensing mode, the specific location of the third device, the specific location of the target sensing object, etc., and will not be limited here.

The receiver designated by the sensing request can refer to the consumer of the first sensing task who finally obtains the sensing result. It should be understood that the receiver designated by the aforementioned sensing request can be carried in the sensing request.

The identity information of the initiator of the first sensing task can specifically refer to the identity information of the first device. The detailed explanation of the first device is the same as the aforementioned embodiment, and will not be repeated. The receiver designated by the sensing request and the initiator of the first sensing task can be the same device, or they can be different devices, both of which are within the scope of protection of this embodiment, and all possibilities will not be elaborated here. It should be noted that if not specifically stated otherwise below, the initiator of the first sensing task and the first device have the same meaning, and will not be repeated.

Exemplarily, if the fifth message is used to request the third device to authorize the initiator of the first sensing task, the fifth message can carry the identity information of the initiator of the first sensing task. Further, the fifth message can also carry at least one of the following: the identity of the third device, the identity of the first sensing task, the content of the first sensing task, the receiver designated by the sensing request.

Exemplarily, if the fifth message is used to request the third device to authorize the content of the first sensing task, the fifth message can carry the content of the first sensing task. Further, the fifth message can also carry at least one of the following: the identity information of the third device, the identity of the first sensing task, the identity information of the initiator of the first sensing task, the identity information of the receiver designated by the sensing request.

Exemplarily, if the fifth message is used to request the third device to authorize assisted sensing for the first sensing task, the fifth message can carry the information of the sensing mode of the first sensing task. Further, the fifth message can also carry at least one of the following: the identity information of the third device, the identity of the first sensing task, the content of the first sensing task, the identity information of the initiator of the first sensing task, the identity information of the receiver designated by the sensing request.

The response message for the fifth message can be used to indicate that the third device does not authorize the first sensing task, or to indicate that the third device authorizes the first sensing task. The content of the response message for the fifth message indicating whether the third device authorizes the first sensing task is related to the authorization content requested by the aforementioned fifth message. For example, if the fifth message is used to request the third device to authorize the initiator of the first sensing task, the response message for the fifth message can be used to indicate that the third device does not authorize the initiator of the first sensing task, or to indicate that the third device authorizes the initiator of the first sensing task. For example, if the fifth message is used to request the third device to authorize the content of the first sensing task, the response message for the fifth message can be used to indicate that the third device does not authorize the content of the first sensing task, or to indicate that the third device authorizes the content of the first sensing task. For example, if the fifth message is used to request the third device to authorize assisted sensing for the first sensing task, the response message for the fifth message can be used to indicate that the third device does not authorize assisted sensing for the first sensing task, or to indicate that the third device authorizes assisted sensing for the first sensing task.

Furthermore, when the response message for the fifth message indicates that the third device does not authorize the first sensing task, the response message for the fifth message can carry the rejection cause of the third device. Exemplarily, the rejection cause can include at least one of the following: rejecting to authorize the content of the first sensing task, rejecting to authorize the initiator of the first sensing task to sense the third device, rejecting to assist in sensing the first sensing task, etc. The aforementioned rejection cause can also be related to the specific authorization content requested by the fifth message, and is similar to the aforementioned embodiment regarding the fourth message and its corresponding rejection cause, so it will not be repeated here.

By adopting the method of requesting the third device to authorize the sensing task, the leakage of privacy data of the third device can be avoided. Compared with the authorization based on subscription messages, directly requesting authorization from the third device can obtain the latest user permission, meeting the sensing permission degree of users which is dynamically changed in different scenarios, different locations, and at different times. It avoids the problem of privacy leakage caused by the untimely update of subscription messages when user sensing permission changes. In addition, the willingness of the third device (for example, the second terminal device or the third access network device) to assist in sensing also varies in different scenarios. For example, when carrying a large amount of service, there is no enough resource to allocate to sensing tasks. Directly requesting authorization for assisted sensing from the third device can avoid the problem of the third device carrying other services being preempted by sensing tasks. In addition, more refined sensing authorization granularity can make users' authorization decisions more flexible.

Optionally, the request for sensing authorization from the third device is secondary authorization.

Before sending the fifth message to the third device, the method further includes: the second network device determining the sensing measurement data required by the first sensing task; the second network device selecting the third device that satisfies the preset condition based on the sensing measurement data required by the first sensing task. The preset condition includes: the sensing measurement data obtained by executing the second sensing task can be reused by the first sensing task.

The sensing measurement data required by the first sensing task can be carried by the sensing request. Exemplarily, the information of the sensing measurement data required by the first sensing task includes at least one of the following: the category of the sensing measurement data required by the first sensing task, the precision of the sensing measurement data required by the first sensing task, the size of the sensing measurement data required by the first sensing task.

The second network device selecting the third device that satisfies the preset condition based on the sensing measurement data required by the first sensing task can include: the second network device selecting the third device from the one or more terminal devices that satisfy the preset condition. For example, the second network device determines the k-th device that executes another sensing task(s) from the one or more terminal devices, takes the other sensing task as the second sensing task, obtains the sensing measurement data obtained by the k-th device executing the second sensing task, determines whether the preset condition that the sensing measurement data obtained by executing the second sensing task can be reused by the first sensing task is satisfied; if the preset condition is satisfied, the k-th device is taken as the third device; k is a positive integer; if the preset condition is not satisfied, continue to determine the k+1-th device that executes another sensing task from the one or more terminal devices, and continue the above processing, which will not be repeated here. The second sensing task can refer to other sensing tasks executed by the third device in the past, or other sensing tasks currently being executed by the third device, as long as the second sensing task is different from the first sensing task, it is within the scope of protection of this embodiment. In addition, the third device executing other sensing task can refer to the third device being the sender of the sensing signal for other sensing task, and/or the third device being the receiver of the sensing signal for other sensing tasks.

The determination of whether the sensing measurement data obtained by executing the second sensing task can be reused by the first sensing task can include: determining whether the information of the sensing measurement data obtained by executing the second sensing task matches the information of the sensing measurement data required by the first sensing task. That is to say, the determination of whether the sensing measurement data obtained by executing the second sensing task can be reused by the first sensing task can include at least one of the following: determining whether the category of the sensing measurement data obtained by executing the second sensing task is the same as the category of the sensing measurement data required by the first sensing task; determining whether the precision of the sensing measurement data obtained by executing the second sensing task is the same as the precision of the sensing measurement data required by the first sensing task; determining whether the size of the sensing measurement data obtained by executing the second sensing task is the same as the size of the sensing measurement data required by the first sensing task.

It should be noted that the number of third devices selected based on the above processing method can be one or more, which is within the scope of protection of this embodiment. In order to describe simply, the third device referred to below can be any one of the one or more third devices that satisfy the preset condition.

The fifth message is used to request the third device to authorize the first sensing task to reuse the sensing measurement data obtained by executing the second sensing task; after the second network device receives the response message for the fifth message sent by the third device, the method further includes: when the response message for the fifth message indicates that the third device authorizes the first sensing task to reuse the sensing measurement data obtained by executing the second sensing task, the second network device obtains the sensing result of the first sensing task based on the sensing measurement data obtained by the third device executing the second sensing task, and sends the sensing result of the first sensing task to the receiver designated by the sensing request.

In this case, the aforementioned fifth message at least carries the information of the sensing measurement data required by the first sensing task. Here, the information of the sensing measurement data required by the first sensing task is the same as the aforementioned embodiment, and will not be repeated. Exemplarily, in addition the information of the sensing measurement data required by the first sensing task, the fifth message can also carry at least one of the following: the identity information of the third device, the identity of the first sensing task, the content of the first sensing task, the identity information of the initiator of the first sensing task, the identity information of the receiver designated by the sensing request, the information of the sensing mode of the first sensing task. The receiver designated by the sensing request can also be the entity to which is data is opened. The detailed explanation of the above content is the same as the aforementioned embodiment, so it will not be repeated.

The response message for the fifth message indicates that the third device does not authorize the first sensing task to reuse the sensing measurement data obtained by executing the second sensing task, or to indicate that the third device authorizes the first sensing task to reuse the sensing measurement data obtained by executing the second sensing task.

Exemplarily, the sending of the sensing result of the first sensing task to the receiver designated by the sensing request can refer to the second network device sending a sensing response to the receiver designated by the sensing request, and the sensing response carrying the sensing result of the first sensing task.

In addition, when the response message for the fifth message indicates that the third device does not authorize the first sensing task to reuse the sensing measurement data obtained by executing the second sensing task, the response message for the fifth message can also carry the rejection cause of the third device. The rejection cause can be similar to the aforementioned embodiment, so it will not be repeated here. When the response message for the fifth message indicates that the third device does not authorize the first sensing task to reuse the sensing measurement data obtained by executing the second sensing task, the aforementioned second network device can also send a sensing response to the receiver designated by the sensing request, and the sensing response indicates that the first sensing task is not authorized to use the sensing measurement data obtained by other sensing tasks; or, the aforementioned second network device can also control the re-execution of sensing measurement to obtain new sensing measurement data, and the subsequent processing will not be repeated.

This example can perform secondary authorization when it is necessary to reuse sensing measurement data, thereby avoiding the problem of an unauthorized third party obtaining user-measured sensing measurement data for unknown purposes, and eliminating the possibility of the unauthorized third party obtaining sensing results by sending the same sensing request as the authorized sensing task initiator.

It can be seen that by adopting the solution provided in the disclosure, the second network device can directly request to the third device whether the third device authorizes the sensing task. Compared with the authorization based on subscription messages, directly requesting authorization from the third device can obtain the latest user permission, meeting the sensing permission degree of users which is dynamically changed in different scenarios, different locations, and at different times, and avoiding the problem of privacy leakage caused by the untimely update of subscription messages when user sensing permission changes. In addition, the willingness of the third device to authorize a certain sensing task also varies in different scenarios. Therefore, directly requesting authorization from the third device can avoid the problem of the third device carrying other services being preempted by sensing tasks. In addition, more refined sensing authorization granularity can make users' authorization decisions more flexible.

Figure 13 is a schematic structural diagram of a first network device according to an embodiment of the disclosure. The first network device includes a first communication unit 1301 configured to: receive a first message, the first message carries information of a first sensing task; send a second message, the second message carries information of each of one or more electronic devices within a target sensing area, the target sensing area is related to the first sensing task.

Based on Figure 13, as illustrated in Figure 14, the first network device further includes a first processing unit 1302, which is configured to determine the one or more electronic devices within the target sensing area based on the information of the first sensing task.

The information of the first sensing task includes the information of the target sensing object of the first sensing task; the electronic device is different from the target sensing object.

The information of the target sensing object includes at least one of the following: identity information of the target sensing object, a first location of the target sensing object.

The first processing unit is configured to: determine the second location of the target sensing object based on the information of the target sensing object; determine a target sensing area of each of one or more granularities corresponding to the target sensing object based on the second location of the target sensing object; determine one or more electronic devices different from the target sensing object from one or more candidate devices within each target sensing area of each granularity.

The second message carries information of each of one or more electronic devices within each target sensing area of each granularity.

The one or more granularities include at least one of the following: registration area (RA), tracking area (TA), cell, sector, specified radius.

The first processing unit is configured to: determine a second location of the target sensing object based on the information of the target sensing object; determine a target sensing area for the target granularity corresponding to the target sensing object based on the second location of the target sensing object and the target granularity; determine one or more electronic devices different from the target sensing object from one or more candidate devices within the target sensing area of the target granularity corresponding to the target sensing object.

The second message carries information of each of one or more electronic devices within the target sensing area of the target granularity.

The target granularity includes one of the following: RA, TA, cell, sector, specified radius.

The target granularity is pre-configured; or, the target granularity is carried by the information of the first sensing task.

The first processing unit is configured to take its own serving area as the target sensing area; determining one or more electronic devices different from the target sensing object from one or more candidate devices within the target sensing area.

The information of the first sensing task includes: the target sensing area of the first sensing task.

The first processing unit is configured to determine one or more candidate devices within the target sensing area, and take the one or more candidate devices as the one or more electronic devices.

The first communication unit is configured to send the second message to the second network device.

The first communication unit is configured to receive a first message sent by the first device, the first message carries a sensing request, the sensing request carries the information of the first sensing task, the first device is an initiator of the first sensing task.

The first network device is a first core network device; the second network device is a second core network device with a sensing capability; the first device includes one of the following: a first terminal device, a first access network device, a first server, a third core network device.

The first communication unit is configured to receive a first message sent by the second network device, the first message is used to request information of each terminal device within the target sensing area.

The first network device is a first core network device or a second access network device; the second network device is a second core network device with a sensing capability.

Figure 15 is a schematic structural diagram of a second network device according to an embodiment of the disclosure.

The second network device includes a second communication unit 1501, which is configured to receive a second message. The second message carries information of each of one or more electronic devices within a target sensing area, the target sensing area is related to a first sensing task.

The information of the first sensing task includes the information of the target sensing object of the first sensing task; the electronic device is different from the target sensing object.

The information of the target sensing object includes at least one of the following: the identity information of the target sensing object, the first location of the target sensing object.

The second message carries information of each of one or more electronic devices within the target sensing area of each of one or more granularities.

The one or more granularities include at least one of the following: RA, TA, cell, sector, specified radius.

The second message carries information of each of one or more electronic devices within the target sensing area of the target granularity, the target granularity including one of the following: RA, TA, cell, sector, specified radius.

The information of the first sensing task includes the target granularity.

The information of the first sensing task includes the target sensing area of the first sensing task.

The second communication unit is configured to receive a second message sent by the first network device.

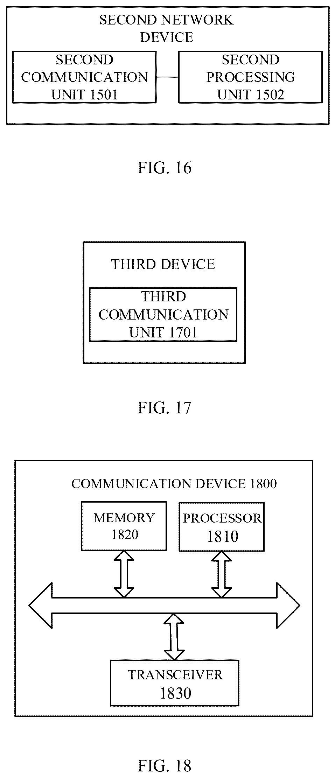

Based on Figure 15, as illustrated in Figure 16, the second network device further includes a second processing unit 1502, which is configured to determine the first network device based on the information of the first sensing task. The second communication unit is configured to: receive a sensing request sent by the first device, the sensing request carries the information of the first sensing task, the first device is the initiator of the first sensing task; send a first message to the first network device, the first message is used to request information of each electronic device within the target sensing area, the first message carries the information of the first sensing task.

The information of the first sensing task includes the information of the target sensing object; the second processing unit is configured to determine the second location of the target sensing object based on the information of the target sensing object, and determine a first network device whose serving area covers the second location of the target sensing object.

The information of the first sensing task includes the target sensing area of the first sensing task; the second processing unit is configured to determine the first network device whose serving area covers the target sensing area.

The first network device is a first core network device; the second network device is a second core network device with a sensing capability.

The second processing unit is configured to perform one of the following: when determining that the sensing mode of the first sensing task is a mode of sensing executed by an access network device, determining a candidate access network device for executing the first sensing task based on the information of the first sensing task, and determining the first network device based on the candidate access network device for executing the first sensing task; when determining that the sensing mode of the first sensing task is a mode of sensing executed by a terminal device, determining a candidate terminal device for executing the first sensing task based on the information of the first sensing task, and determining the first network device based on the candidate terminal device for executing the first sensing task; when determining that the sensing mode of the first sensing task is a mode of sensing collaboratively executed by an access network device and a terminal device, determining a candidate access network device and a candidate terminal device for executing the first sensing task based on the information of the first sensing task, and determining the first network device based on the candidate access network device and the candidate terminal device for executing the first sensing task.

The first network device is a second access network device; the second network device is a second core network device with a sensing capability.

The second communication unit is configured to: send a fourth message to the second device, the fourth message is used to request the second device to authorize the first sensing task, the second device is one of the one or more electronic devices within the target sensing area; receive a response message for the fourth message sent by the second device, the response message for the fourth message is used to indicate whether the second device authorizes the first sensing task.

The fourth message is used to request the second device to authorize the first sensing task to reuse the sensing measurement data obtained by executing the second sensing task; the response message for the fourth message indicates whether the second device authorizes the first sensing task to reuse the sensing measurement data obtained by executing the second sensing task.

The second processing unit is configured to select the second device that satisfies a preset condition from the one or more electronic devices, the preset condition includes that the sensing measurement data obtained by executing the second sensing task can be reused by the first sensing task.

The second processing unit is configured to, when the response message for the fourth message indicates that the second device authorizes the first sensing task to reuse the sensing measurement data obtained by executing the second sensing task, obtain the sensing result of the first sensing task based on the sensing measurement data obtained by the second device executing the second sensing task, and send the sensing result of the first sensing task to the receiver designated by the sensing request through the second communication unit.

The fourth message carries at least one of the following: the identity information of the second device, the identity of the first sensing task, the content of the first sensing task, the identity information of the initiator of the first sensing task, the identity information of the receiver designated by the sensing request, the information of the sensing mode of the first sensing task, the information of the sensing measurement data required by the first sensing task.

The content of the first sensing task includes at least one of the following: the type of the first sensing task, the requirement of the first sensing task, the execution device of the first sensing task.

The information of the sensing mode includes at least one of the following: a mode of sensing executed by an access network device, a mode of sensing executed by a terminal device, a mode of sensing collaboratively executed by an access network device and a terminal device, the second device as the sender of the sensing signal, the second device as the receiver of the sensing signal.

The information of the sensing measurement data required by the first sensing task includes at least one of the following: the category of the sensing measurement data required by the first sensing task, the precision of the sensing measurement data required by the first sensing task, the size of the sensing measurement data required by the first sensing task.

When the response message for the fourth message indicates that the second device does not authorize the first sensing task, the response message for the fourth message can carry the rejection cause of the second device.

The second processing unit is configured to obtain the subscription message of the second device, the second device is one of the one or more electronic devices within the target sensing area; determine whether the second device authorizes the first sensing task based on the subscription message of the second device.

The second network device according to another embodiment of the disclosure has the same structure as illustrated in Figures 15-16, and includes a second communication unit and a second processing unit.

The second communication unit is configured to: send a fifth message to a third device, the fifth message is used to request the third device to authorize the first sensing task; receive a response message for the fifth message sent by the third device, the response message for the fifth message is used to indicate whether the third device authorizes the first sensing task.

The second processing unit is configured to select the third device that executes the first sensing task based on the sensing mode of the first sensing task and the target sensing area of the first sensing task.

The second processing unit is configured to: determine the sensing measurement data required by the first sensing task; select the third device that satisfies the preset condition based on the sensing measurement data required by the first sensing task, the preset condition includes: the sensing measurement data obtained by executing the second sensing task can be reused by the first sensing task.

The fifth message is used to request the third device to authorize the first sensing task to reuse the sensing measurement data obtained by executing the second sensing task; the second processing unit is configured to: when the response message for the fifth message indicates that the third device authorizes the first sensing task to reuse the sensing measurement data obtained by executing the second sensing task, obtain the sensing result of the first sensing task based on the sensing measurement data obtained by the third device executing the second sensing task, and send the sensing result of the first sensing task to the receiver designated by the sensing request through the second communication unit.

The fifth message carries at least one of the following: the identity information of the third device, the identity of the first sensing task, the content of the first sensing task, the identity information of the initiator of the first sensing task, the identity information of the receiver designated by the sensing request, the information of the sensing mode of the first sensing task, the information of the sensing measurement data required by the first sensing task.

The content of the first sensing task includes at least one of the following: the type of the first sensing task, the requirement of the first sensing task, the execution device of the first sensing task.

The information of the sensing mode includes at least one of the following: a mode of sensing executed by an access network device, a mode of sensing executed by a terminal device, a mode of sensing collaboratively executed by an access network device and a terminal device, the third device as the sender of the sensing signal, the third device as the receiver of the sensing signal.

The information of the sensing measurement data required by the first sensing task includes at least one of the following: the category of the sensing measurement data required by the first sensing task, the precision of the sensing measurement data required by the first sensing task, the size of the sensing measurement data required by the first sensing task.

When the response message for the fifth message indicates that the third device does not authorize the first sensing task, the response message for the fifth message can carry the rejection cause of the third device.

The third device is a third access network device.

The third device is a second terminal device; the second communication unit is configured to: send the fifth message to the second terminal device through the fourth access network device, the fourth access network device serves the second terminal device; receive a response message for the fifth message sent by the second terminal device through the fourth access network device.

The second network device is a second core network device with a sensing capability.

The third device according to another embodiment of the disclosure has the structure illustrated in Figure 17, includes a third communication unit 1701.

The third communication unit 1701 is configured to: receive a fifth message sent by the second network device, the fifth message is used to request the third device to authorize the first sensing task; send a response message for the fifth message to the second network device, the response message for the fifth message is used to indicate whether the third device authorizes the first sensing task.

The fifth message carries at least one of the following: the identity information of the third device, the identity of the first sensing task, the content of the first sensing task, the identity information of the initiator of the first sensing task, the identity information of the receiver designated by the sensing request, the information of the sensing mode of the first sensing task, the information of the sensing measurement data required by the first sensing task.

The content of the first sensing task includes at least one of the following: the type of the first sensing task, the requirement of the first sensing task, the execution device of the first sensing task.

The information of the sensing mode includes at least one of the following: a mode of sensing executed by an access network device, a mode of sensing executed by a terminal device, a mode of sensing collaboratively executed by an access network device and a terminal device, the third device as the sender of the sensing signal, the third device as the receiver of the sensing signal.

The information of the sensing measurement data required by the first sensing task includes at least one of the following: the category of the sensing measurement data required by the first sensing task, the precision of the sensing measurement data required by the first sensing task, the size of the sensing measurement data required by the first sensing task.

When the response message for the fifth message indicates that the third device does not authorize the first sensing task, the response message for the fifth message can carry the rejection cause of the third device.

The third device is a third access network device or a second terminal device; the second network device is a second core network device with a sensing capability.

The first network device, the second network device, and the third device of the disclosure can implement the corresponding functions of the first device and the target second device in the aforementioned communication method embodiments. The various modules (sub-modules, units or components, etc.) of the first network device, the second network device, and the third device described in the disclosure, their corresponding processes, functions, implementation methods, and beneficial effects can refer to the corresponding descriptions in the aforementioned method embodiments, and will not be repeated here. It should be noted that the functions of the various modules (sub-modules, units or components, etc.) of the first network device described in the embodiments of the disclosure can be implemented by different modules (sub-modules, units or components, etc.), or they can be implemented by the same module (sub-module, unit or component, etc.). The functions of the various modules (sub-modules, units or components, etc.) of the second network device described in the disclosure can be implemented by different modules (sub-modules, units or components, etc.), or they can be implemented by the same module (sub-module, unit or component, etc.). The functions of the various modules (sub-modules, units or components, etc.) of the third device described in the disclosure can be implemented by different modules (sub-modules, units or components, etc.), or they can be implemented by the same module (sub-module, unit or component, etc.).

Figure 18 is a schematic structural diagram of a communication device 1800 according to an embodiment of the disclosure. The communication device 1800 includes a processor 1810, which can invoke and execute a computer program from a memory to enable the communication device 1800 to implement the method of the disclosure. In one possible implementation, the communication device 1800 can also include a memory 1820. The processor 1810 can invoke and execute a computer program from the memory 1820 to enable the communication device 1800 to implement the method of the disclosure. The memory 1820 can be a separate device independent of the processor 1810, or it can be integrated in the processor 1810. In one possible implementation, the communication device 1800 can also include a transceiver 1830, which can be controlled by the processor 1810 to communicate with other devices. Specifically, it can send information or data to other devices or receive information or data sent by other devices. The transceiver 1830 can include a transmitter and a receiver. The transceiver 1830 can also further include an antenna, and the number of antennas can be one or more. In one possible implementation, the communication device 1800 can be the first network device of the disclosure, and the communication device 1800 can implement the corresponding process of the first network device in the various methods of the disclosure. For the sake of simplicity, it will not be repeated here. In one possible implementation, the communication device 1800 can be the second network device of the disclosure, and the communication device 1800 can implement the corresponding process of the second network device in the various methods of the disclosure. For the sake of simplicity, it will not be repeated here. In one possible implementation, the communication device 1800 can be the third device of the disclosure, and the communication device 1800 can implement the corresponding process of the third device in the various methods of the disclosure. For the sake of simplicity, it will not be repeated here.

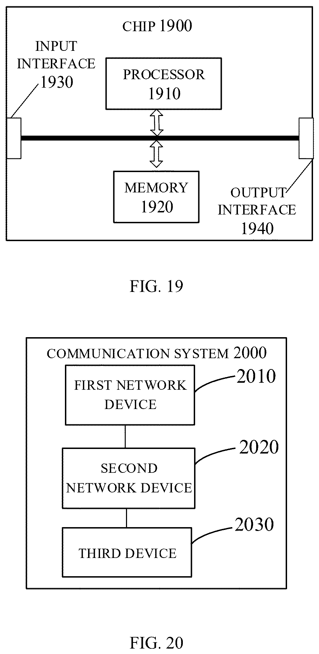

Figure 19 is a schematic structural diagram of a chip 1900 according to an embodiment of the disclosure. The chip 1900 includes a processor 1910, which can invoke and execute a computer program from a memory to implement the method of the disclosure. In one possible implementation, the chip 1900 can also include a memory 1920. The processor 1910 can invoke and execute a computer program from the memory 1920 to implement the method of the disclosure implemented by the first device, or the target second device. The memory 1920 can be a separate device independent of the processor 1910, or it can be integrated in the processor 1910. In one possible implementation, the chip 1900 can also include an input interface 1930. The processor 1910 can control the input interface 1930 to communicate with other devices or chips, specifically, it can obtain information or data sent by other devices or chips. In one possible implementation, the chip 1900 can also include an output interface 1940. The processor 1910 can control the output interface 1940 to communicate with other devices or chips, specifically, it can output information or data to other devices or chips.

In one possible implementation, the chip can be applied to the first network device of the disclosure, and the chip can implement the corresponding process of the first network device in the various methods of the disclosure. For the sake of simplicity, it will not be repeated here. In one possible implementation, the chip can be applied to the second network device of the disclosure, and the chip can implement the corresponding process of the second network device in the various methods of the disclosure. For the sake of simplicity, it will not be repeated here. In one possible implementation, the chip can be applied to the third device of the disclosure, and the chip can implement the corresponding process of the third device in the various methods of the disclosure. For the sake of simplicity, it will not be repeated here. It should be understood that the chip mentioned in the disclosure can also be referred to as a system-on-chip, a system chip, a chip system, or a system on chip, etc. The aforementioned processor can be a general-purpose processor, a digital signal processor (DSP), a field programmable gate array (FPGA), an application-specific integrated circuit (ASIC), or other programmable logic devices, transistor logic devices, discrete hardware components, etc. The aforementioned memory can be a volatile memory or a non-volatile memory, or it can include both volatile and non-volatile memories. The non-volatile memory can be a read-only memory (ROM), a programmable read-only memory (PROM), an erasable programmable read-only memory (EPROM), an electrically erasable programmable read-only memory (EEPROM), or flash memory. The volatile memory can be a random access memory (RAM). It should be understood that the aforementioned memory is illustrative but not restrictive. For example, the memory in the disclosure can also be a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchronous link dynamic random access memory (SLDRAM), and a direct memory bus random access memory (DR RAM), etc. In other words, the memory in the disclosure is intended to include but not limited to these and any other suitable types of memory.

Figure 20 is a schematic block diagram of a communication system 2000 according to an embodiment of the disclosure. The communication system 2000 includes a first network device 2010, a second network device 2020, and a third device 2030. The first network device 2010 can be used to implement the corresponding functions of the first network device in the aforementioned methods. The second network device 2020 can be used to implement the corresponding functions of the second network device in the aforementioned methods. The third device 2030 can be used to implement the corresponding functions of the third device in the aforementioned methods.

In the aforementioned embodiments, the various processes can be implemented in whole or in part through software, hardware, firmware, or any combination thereof. When implemented through software, the processes can be implemented in whole or in part in the form of a computer program product. The computer program product includes one or more computer instructions. When the computer program instructions are loaded and executed on a computer, the processes or functions described in the disclosure are generated in whole or in part. The computer can be a general-purpose computer, a dedicated computer, a computer network, or any other programmable device. The computer instructions can be stored in a computer-readable storage medium or transmitted from one computer-readable storage medium to another. The computer-readable storage medium can be any available medium that a computer can access, or it can be a data storage device integrating one or more available media, such as a server, a data center, etc. The available medium can be a magnetic medium (for example, a floppy disk, a hard disk, a magnetic tape), an optical medium (for example, a DVD), or a semiconductor medium (for example, a solid-state disk (SSD)). The computer-readable storage medium is intended to include but not be limited to these and any other suitable types of storage media.

It should be understood that in the various embodiments of the disclosure, the order of the various processes indicated by the sequence numbers does not necessarily indicate the order of execution. The order of execution of the processes should be determined based on their functions and inherent logic, and should not be limited by the order of the sequence numbers. Those skilled in the art can clearly understand that, for the convenience of description, the above-described systems, devices, and units can refer to the corresponding processes in the aforementioned method embodiments, and will not be repeated here. The specific work processes of the systems, devices, and units can refer to the corresponding processes in the aforementioned method embodiments, and will not be repeated here. All the embodiments mentioned above are only specific implementations of the disclosure, but the scope of protection of the disclosure is not limited to this. Any person familiar with this technology can easily think of changes or replacements within the scope of the technical solution of the disclosure, and all should be covered within the scope of protection of the disclosure. Therefore, the scope of protection of the disclosure should be based on the scope of protection of the claims.

## Claims

1. A communication method, comprising:
receiving, by a first network device, a first message, wherein the first message carries information of a first sensing task; and
sending, by the first network device, a second message, wherein the second message carries information of each of one or more electronic devices within a target sensing area, and the target sensing area is related to the first sensing task.

2. The method of claim 1, wherein before sending, by the first network device, the second message, the method further comprises:
determining, by the first network device, the one or more electronic devices within the target sensing area based on the information of the first sensing task.

3. The method of claim 2, wherein the information of the first sensing task comprises information of a target sensing object of the first sensing task, and the electronic device is different from the target sensing object.

4. The method of claim 3, wherein the information of the target sensing object comprises at least one of: identity information of the target sensing object, a first location of the target sensing object.

5. The method of claim 3 or 4, wherein determining, by the first network device, the one or more electronic devices within the target sensing area based on the information of the first sensing task comprises:
determining, by the first network device, a second location of the target sensing object based on the information of the target sensing object;
determining, by the first network device, a target sensing area of each of one or more granularities corresponding to the target sensing object based on the second location of the target sensing object; and
determining, by the first network device, one or more electronic devices different from the target sensing object from one or more candidate devices within each target sensing area of each granularity.

6. The method of claim 5, wherein the second message carries information of each of one or more electronic devices within each target sensing area of each granularity.

7. The method of claim 5 or 6, wherein the one or more granularities comprises at least one of: registration area (RA), tracking area (TA), cell, sector, specified radius.

8. The method of claim 3 or 4, wherein determining, by the first network device, one or more electronic devices within the target sensing area based on the information of the first sensing task comprises:
determining, by the first network device, a second location of the target sensing object based on the information of the target sensing object;
determining, by the first network device, a target sensing area of a target granularity corresponding to the target sensing object based on the second location of the target sensing object and the target granularity; and
determining, by the first network device, one or more electronic devices different from the target sensing object from one or more candidate devices within the target sensing area of the target granularity corresponding to the target sensing object.

9. The method of claim 8, wherein the second message carries information of each electronic device within the target sensing area of the target granularity.

10. The method of claim 8 or 9, wherein the target granularity comprises at least one of: RA, TA, cell, sector, specified radius.

11. The method of any one of claims 8 to 10, wherein the target granularity is pre-configured, or the target granularity is carried in the information of the first sensing task.

12. The method of claim 3 or 4, wherein determining, by the first network device, the one or more electronic devices within the target sensing area based on the information of the first sensing task comprises:
taking, by the first network device, a serving area of the first network device as the target sensing area; and
determining, by the first network device, one or more electronic devices different from the target sensing object from one or more candidate devices within the target sensing area.

13. The method of claim 2, wherein the information of the first sensing task comprises: the target sensing area of the first sensing task.

14. The method of claim 13, wherein determining, by the first network device, the one or more electronic devices within the target sensing area based on the information of the first sensing task comprises:
determining, by the first network device, one or more candidate devices within the target sensing area; and
taking, by the first network device, the one or more candidate devices as the one or more electronic devices.

15. The method of any one of claims 1 to 14, wherein sending, by the first network device, the second message comprises:
sending, by the first network device, the second message to a second network device.

16. The method of any one of claims 1 to 15, wherein receiving, by the first network device, the first message comprises:
receiving, by the first network device, the first message from a first device, the first message carrying a sensing request, the sensing request carrying the information of the first sensing task, the first device being an initiator of the first sensing task.

17. The method of claim 16, wherein the first network device is a first core network device, a second network device is a second core network device with a sensing capability; and the first device comprises at least one of: a first terminal device, a first access network device, a first server, a third core network device.

18. The method of any one of claims 1 to 15, wherein receiving, by the first network device, the first message comprises:
receiving, by the first network device, the first message from a second network device, wherein the first message is used to request information of each electronic device within the target sensing area.

19. The method of claim 18, wherein the first network device is a first core network device or a second access network device, andthe second network device is a second core network device with a sensing capability.

20. A communication method, comprising:
receiving, by a second network device, a second message, wherein the second message carries information of each of one or more electronic devices within a target sensing area, and the target sensing area being related to a first sensing task.

21. The method of claim 20, wherein information of the first sensing task comprises information of a target sensing object of the first sensing task, and the electronic device is different from the target sensing object.

22. The method of claim 21, wherein the information of the target sensing object comprises at least one of: identity information of the target sensing object, a first location of the target sensing object.

23. The method of claim 21 or 22, wherein the second message carries information of each of one or more electronic devices within a target sensing area of each of one or more granularities.

24. The method of claim 23, wherein the one or more granularities comprises at least one of: registration area (RA), tracking area (TA), cell, sector, specified radius.

25. The method of claim 21 or 22, wherein the second message carries information of each of one or more electronic device within a target sensing area of a target granularity, the target granularity comprising one of: RA, TA, cell, sector, specified radius.

26. The method of claim 25, wherein the information of the first sensing task comprises the target granularity.

27. The method of claim 20, wherein information of the first sensing task comprises the target sensing area of the first sensing task.

28. The method of any one of claims 20 to 27, wherein receiving, by the second network device, the second message comprises:
receiving, by the second network device, the second message from a first network device.

29. The method of claim 28, wherein before receiving, by the second network device, the second message, the method further comprises:
receiving, by the second network device, a sensing request from a first device, wherein the sensing request carries information of the first sensing task, the first device is an initiator of the first sensing task;
determining, by the second network device, a first network device based on the information of the first sensing task; and
sending, by the second network device, a first message to the first network device, wherein the first message is used to request information of each electronic device within the target sensing area, and the first message carries the information of the first sensing task.

30. The method of claim 29, wherein the information of the first sensing task comprises the information of the target sensing object, and determining, by the second network device, the first network device based on the information of the first sensing task comprises:
determining, by the second network device, a second location of the target sensing object based on information of the target sensing object; and
determining, by the second network device, the first network device whose serving area covers the second location of the target sensing object.

31. The method of claim 29, wherein the information of the first sensing task comprises a target sensing area of the first sensing task, and determining, by the second network device, the first network device based on the information of the first sensing task comprises:
determining, by the second network device, the first network device whose serving area covers the target sensing area.

32. The method of any one of claims 28 to 31, wherein the first network device is a first core network device, and the second network device is a second core network device with a sensing capability.

33. The method of claim 29, wherein determining, by the second network device, the first network device based on the information of the first sensing task comprises one of:
when determining that a sensing mode of the first sensing task is a mode of sensing executed by an access network device, determining, by the second network device, candidate access network devices for executing the first sensing task based on the information of the first sensing task, and determining the first network device based on the candidate access network devices for executing the first sensing task;
when determining that the sensing mode of the first sensing task is a mode of sensing executed by a terminal device, determining, by the second network device, candidate terminal devices for executing the first sensing task based on the information of the first sensing task, and determining the first network device based on the candidate terminal devices for executing the first sensing task; or
when determining that the sensing mode of the first sensing task is a mode of sensing executed by the access network device and the terminal device, determining, by the second network device, candidate access network devices and candidate terminal devices for executing the first sensing task based on the information of the first sensing task, and determining the first network device based on the candidate access network devices and the candidate terminal devices for executing the first sensing task.

34. The method of claim 28, 29, or 33, wherein the first network device is a second access network device, and the second network device is a second core network device with a sensing capability.

35. The method of any one of claims 20 to 34, wherein after receiving, by the second network device, the second message, the method further comprises:
sending, by the second network device to the second device, a fourth message, wherein the fourth message is used to request the second device to authorize the first sensing task, the second device is one of the one or more electronic devices within the target sensing area; and
receiving, by the second network device, a response message for the fourth message sent by the second device, wherein the response message for the fourth message indicates whether the second device authorizes the first sensing task.

36. The method of claim 35, wherein
the fourth message is used to request the second device to authorize the first sensing task to reuse sensing measurement data obtained by executing a second sensing task;
the response message for the fourth message indicates whether the second device authorizes the first sensing task to reuse the sensing measurement data obtained by executing the second sensing task.

37. The method of claim 36, wherein before sending, by the second network device to the second device, the fourth message, the method further comprises:
selecting, by the second network device, the second device that satisfies a preset condition from the one or more electronic devices; and
the preset condition comprising: the sensing measurement data obtained by executing the second sensing task can be reused by the first sensing task.

38. The method of claim 37, wherein after receiving, by the second network device, the response message for the fourth message sent by the second device, the method further comprises:
when the response message for the fourth message indicates that the second device authorizes the first sensing task to reuse the sensing measurement data obtained by executing the second sensing task, obtaining, by the second network device, a sensing result of the first sensing task based on the sensing measurement data obtained by executing the second sensing task by the second device, and sending the sensing result of the first sensing task to a receiver designated by the sensing request.

39. The method of any one of claims 35 to 38, wherein the fourth message carries at least one of: identity information of the second device, identity of the first sensing task, content of the first sensing task, identity information of an initiator of the first sensing task, identity information of a receiver designated by the sensing request, information of a sensing mode of the first sensing task, information of sensing measurement data required by the first sensing task.

40. The method of claim 39, wherein the content of the first sensing task comprises at least one of: a type of the first sensing task, a requirement of the first sensing task, an execution device of the first sensing task.

41. The method of claim 39, wherein the information of the sensing mode comprises at least one of: a mode of sensing executed by an access network device, a mode of sensing executed by a terminal device, a mode of sensing executed by the access network device and the terminal device, the second device as a transmitter of the sensing signal, the second device as a receiver of the sensing signal.

42. The method of claim 39, wherein the information of the sensing measurement data required by the first sensing task comprises at least one of: a category of the sensing measurement data required by the first sensing task, precision of the sensing measurement data required by the first sensing task, a size of the sensing measurement data required by the first sensing task.

43. The method of any one of claims 35 to 42, wherein when the response message for the fourth message indicates that the second device does not authorize the first sensing task, the response message for the fourth message carries a rejection cause of the second device.

44. The method of any one of claims 20 to 34, wherein after receiving, by the second network device, the second message, the method further comprises:
obtaining, by the second network device, a subscription message of a second device, wherein the second device is one of the one or more electronic devices within the target sensing area; and
determining, by the second network device, whether the second device authorizes the first sensing task, based on the subscription message of the second device.

45. A communication method, comprising:
sending, by a second network device to a third device, a fifth message, wherein the fifth message is used to request the third device to authorize a first sensing task; and
receiving, by the second network device from the third device, a response message for the fifth message, wherein the response message for the fifth message indicates whether the third device authorizes the first sensing task.

46. The method of claim 45, wherein before sending the fifth message to the third device, the method further comprises:
selecting, by the second network device, the third device for executing the first sensing task, based on a sensing mode of the first sensing task and a target sensing area of the first sensing task.

47. The method of claim 45, wherein before sending the fifth message to the third device, the method further comprises:
determining, by the second network device, sensing measurement data required by the first sensing task;
selecting, by the second network device, the third device that satisfies a preset condition, based on the sensing measurement data required by the first sensing task, wherein the preset condition comprises: sensing measurement data obtained by executing a second sensing task can be reused by the first sensing task.

48. The method of claim 47, wherein the fifth message is used to request the third device to authorize the first sensing task to reuse the sensing measurement data obtained by executing the second sensing task; after receiving, by the second network device, the response message for the fifth message from the third device, the method further comprises:
when the response message for the fifth message indicates that the third device authorizes the first sensing task to reuse the sensing measurement data obtained by executing the second sensing task, obtaining, by the second network device, a sensing result of the first sensing task based on the sensing measurement data obtained by the third device executing the second sensing task, and sending the sensing result of the first sensing task to the receiver designated by the sensing request.

49. The method of any one of claims 45 to 48, wherein the fifth message carries at least one of the following: identity information of the third device, identity of the first sensing task, content of the first sensing task, identity information of an initiator of the first sensing task, identity information of a receiver designated by the sensing request, information of a sensing mode of the first sensing task, information of the sensing measurement data required by the first sensing task.

50. The method of claim 49, wherein the content of the first sensing task comprises at least one of: a type of the first sensing task, requirement of the first sensing task, an execution device of the first sensing task.

51. The method of claim 49, wherein the information of the sensing mode comprises at least one of: a mode of sensing executed by an access network device, a mode of sensing executed by a terminal device, a mode of sensing collaboratively executed by an access network device and a terminal device, the third device as a sender of a sensing signal, the third device as a receiver of the sensing signal.

52. The method of claim 49, wherein the information of the sensing measurement data required by the first sensing task comprises at least one of: a category of the sensing measurement data required by the first sensing task, precision of the sensing measurement data required by the first sensing task, size of the sensing measurement data required by the first sensing task.

53. The method of any one of claims 45 to 52, wherein when the response message for the fifth message indicates that the third device does not authorize the first sensing task, the response message for the fifth message carries a rejection cause of the third device.

54. The method of any one of claims 45 to 53, wherein the third device is a third access network device.

55. The method of any one of claims 45 to 53, wherein the third device is a second terminal device;
sending, by the second network device, the fifth message to the third device comprises:
sending, by the second network device to the second terminal device, the fifth message via a fourth access network device, wherein the fourth access network device serves the second terminal device;
receiving, by the second network device, the response message for the fifth message from the third device comprises:
receiving, by the second network device, the response message for the fifth message from the second terminal device via the fourth access network device.

56. The method of any one of claims 45 to 55, wherein the second network device is a second core network device with a sensing capability.

57. A communication method, comprising:
receiving, by a third device, a fifth message from a second network device, wherein a fifth message is used to request the third device to authorize a first sensing task; and
sending, by the third device to the second network device, a response message for the fifth message, wherein the response message for the fifth message indicates whether the third device authorizes the first sensing task.

58. The method of claim 57, wherein the fifth message carries at least one of the following: identity information of the third device, identity of the first sensing task, content of the first sensing task, identity information of an initiator of the first sensing task, identity information of a receiver designated by the sensing request, information of a sensing mode of the first sensing task, information of sensing measurement data required by the first sensing task.

59. The method of claim 58, wherein the content of the first sensing task comprises at least one of: a type of the first sensing task, requirement of the first sensing task, an execution device of the first sensing task.

60. The method of claim 58, wherein the information of the sensing mode comprises at least one of: a mode of sensing executed by an access network device, a mode of sensing executed by a terminal device, a mode of sensing collaboratively executed by an access network device and a terminal device, the third device as a sender of a sensing signal, the third device as a receiver of the sensing signal.

61. The method of claim 58, wherein the information of the sensing measurement data required by the first sensing task comprises at least one of: a category of the sensing measurement data required by the first sensing task, precision of the sensing measurement data required by the first sensing task, size of the sensing measurement data required by the first sensing task.

62. The method of any one of claims 57 to 61, wherein when the response message for the fifth message indicates that the third device does not authorize the first sensing task, the response message for the fifth message carries a rejection cause of the third device.

63. The method of any one of claims 57 to 62, wherein the third device is a third access network device or a second terminal device, and the second network device is a second core network device with a sensing capability.

64. A first network device, comprising:
a first communication unit, configured to: receive a first message, wherein the first message carries information of a first sensing task; and send a second message, wherein the second message carries information of each of one or more electronic devices within a target sensing area, and the target sensing area is related to the first sensing task.

65. The first network device of claim 64, further comprising:
a first processing unit, configured to determine the one or more electronic devices within the target sensing area based on the information of the first sensing task.

66. The first network device of claim 65, wherein the information of the first sensing task comprises information of a target sensing object of the first sensing task, and the electronic device is different from the target sensing object.

67. The first network device of claim 66, wherein the information of the target sensing object comprises at least one of: identity information of the target sensing object, a first location of the target sensing object.

68. The first network device of claim 66 or 67, wherein the first processing unit is configured to:
determine a second location of the target sensing object based on the information of the target sensing object;
determine a target sensing area of each of one or more granularities corresponding to the target sensing object based on the second location of the target sensing object; and
determine one or more electronic devices different from the target sensing object from one or more candidate devices within each target sensing area of each granularity.

69. The first network device of claim 68, wherein the second message carries information of each of one or more electronic devices within each target sensing area of each granularity.

70. The first network device of claim 68 or 69, wherein the one or more granularities comprises at least one of: registration area (RA), tracking area (TA), cell, sector, specified radius.

71. The first network device of claim 66 or 67, wherein the first processing unit is configured to:
determine a second location of the target sensing object based on the information of the target sensing object;
determine a target sensing area of a target granularity corresponding to the target sensing object based on the second location of the target sensing object and the target granularity; and
determine one or more electronic devices different from the target sensing object from one or more candidate devices within the target sensing area of the target granularity corresponding to the target sensing object.

72. The first network device of claim 71, wherein the second message carries information of each electronic device within the target sensing area of the target granularity.

73. The first network device of claim 71 or 72, wherein the target granularity comprises at least one of: RA, TA, cell, sector, specified radius.

74. The first network device of claim 71-73, wherein the target granularity is pre-configured, or the target granularity is carried in the information of the first sensing task.

75. The first network device of claim 71 or 72, wherein the first processing unit is configured to:
take a serving area of the first network device as the target sensing area;
determine one or more electronic devices different from the target sensing object from one or more candidate devices within the target sensing area.

76. The first network device of claim 65, wherein the information of the first sensing task comprises: the target sensing area of the first sensing task.

77. The first network device of claim 76, wherein the first processing unit is configured to:
determine one or more candidate devices within the target sensing area; and
take the one or more candidate devices as the one or more electronic devices.

78. The first network device of claim 64-77, wherein the first communication unit is configured to send the second message to a second network device.

79. The first network device of claim 64-78, wherein the first communication unit is configured to receive the first message from a first device, the first message carrying a sensing request, the sensing request carrying the information of the first sensing task, the first device being an initiator of the first sensing task.

80. The first network device of claim 79, wherein the first network device is a first core network device, a second network device is a second core network device with a sensing capability, and the first device comprises at least one of: a first terminal device, a first access network device, a first server, a third core network device.

81. The first network device of claim 64-78, wherein the first communication unit is configured to receive the first message from a second network device, wherein the first message is used to request information of each electronic device within the target sensing area.

82. The first network device of claim 81, wherein the first network device is a first core network device or a second access network device, and the second network device is a second core network device with a sensing capability.

83. A second network device, comprising:
a second communication unit, configured to receive a second message, wherein the second message carries information of each of one or more electronic devices within a target sensing area, and the target sensing area is related to a first sensing task.

84. The second network device of claim 83, wherein information of the first sensing task comprises information of a target sensing object of the first sensing task, and the electronic device is different from the target sensing object.

85. The second network device of claim 84, wherein information of the target sensing object comprises at least one of: identity information of the target sensing object, a first location of the target sensing object.

86. The second network device of claim 84 or 85, wherein the second message carries information of each of one or more electronic devices within the target sensing area of each of one or more granularities.

87. The second network device of claim 86, wherein the one or more granularities comprises at least one of: registration area (RA), tracking area (TA), cell, sector, specified radius.

88. The second network device of claim 84 or 85, wherein the second message carries information of each of one or more electronic device within the target sensing area of a target granularity, the target granularity comprising one of: RA, TA, cell, sector, specified radius.

89. The second network device of claim 88, wherein the information of the first sensing task comprises the target granularity.

90. The second network device of claim 83, wherein information of the first sensing task comprises the target sensing area of the first sensing task.

91. The second network device of claim 83-90, wherein the second communication unit is configured to receive the second message from a first network device.

92. The second network device of claim 91, further comprising:
a second processing unit, configured to determine the first network device based on the information of the first sensing task;
the second communication unit configured to: receive a sensing request from a first device, wherein the sensing request carries information of the first sensing task, the first device is an initiator of the first sensing task; and send a first message to the first network device, wherein the first message is used to request information of each electronic device within the target sensing area, and the first message carries the information of the first sensing task.

93. The second network device of claim 92, wherein the information of the first sensing task comprises the information of the target sensing object;
the second processing unit is configured to: determine a second location of the target sensing object based on the information of the target sensing object; and determine the first network device whose serving area covers the second location of the target sensing object.

94. The second network device of claim 92, wherein the information of the first sensing task comprises the target sensing area of the first sensing task; the second processing unit is configured to determine the first network device whose serving area covers the target sensing area.

95. The second network device of claim 91-94, wherein the first network device is a first core network device, and the second network device is a second core network device with a sensing capability.

96. The second network device of claim 92, wherein the second processing unit is configured to perform one of the following:
when determining that a sensing mode of the first sensing task is a mode of sensing executed by an access network device, determining candidate access network devices for executing the first sensing task based on the information of the first sensing task, and determining the first network device based on the candidate access network devices for executing the first sensing task;
when determining that the sensing mode of the first sensing task is a mode of sensing executed by a terminal device, determining candidate terminal devices for executing the first sensing task based on the information of the first sensing task, and determining the first network device based on the candidate terminal devices for executing the first sensing task; or
when determining that the sensing mode of the first sensing task is a mode of sensing executed by the access network device and the terminal device, determining candidate access network devices and candidate terminal devices for executing the first sensing task based on the information of the first sensing task, and determining the first network device based on the candidate access network devices and the candidate terminal devices for executing the first sensing task.

97. The second network device of claim 91, 92, or 96, wherein the first network device is a second access network device, and the second network device is a second core network device with a sensing capability.

98. The second network device of claim 83-97, wherein the second communication unit is configured to send a fourth message to a second device, wherein the fourth message is used to request the second device to authorize the first sensing task, the second device is one of the one or more electronic devices within the target sensing area; the second communication unit is further configured to receive form the second device a response message for the fourth message, wherein the response message for the fourth message indicates whether the second device authorizes the first sensing task.

99. The second network device of claim 98, wherein the fourth message is used to request the second device to authorize the first sensing task to reuse sensing measurement data obtained by executing a second sensing task;
the response message for the fourth message indicates whether the second device authorizes the first sensing task to reuse the sensing measurement data obtained by executing the second sensing task.

100. The second network device of claim 99, further comprising:
a second processing unit, configured to select the second device that satisfies a preset condition from the one or more electronic devices, the preset condition comprising: the sensing measurement data obtained by executing the second sensing task can be reused by the first sensing task.

101. The second network device of claim 100, wherein the second processing unit is configured to, when the response message for the fourth message indicates that the second device authorizes the first sensing task to reuse the sensing measurement data obtained by executing the second sensing task, obtain a sensing result of the first sensing task based on the sensing measurement data obtained by the second device executing the second sensing task, and send, through the second communication unit, the sensing result of the first sensing task to a receiver designated by the sensing request.

102. The second network device of claim 98-101, wherein the fourth message carries at least one of: identity information of the second device, identity of the first sensing task, content of the first sensing task, identity information of an initiator of the first sensing task, identity information of a receiver designated by the sensing request, information of a sensing mode of the first sensing task, information of sensing measurement data required by the first sensing task.

103. The second network device of claim 102, wherein the content of the first sensing task comprises at least one of: a type of the first sensing task, a requirement of the first sensing task, an execution device of the first sensing task.

104. The second network device of claim 102, wherein the information of the sensing mode comprises at least one of: a mode of sensing executed by an access network device, a mode of sensing executed by a terminal device, a mode of sensing executed by the access network device and the terminal device, the second device as a transmitter of the sensing signal, the second device as a receiver of the sensing signal.

105. The second network device of claim 102, wherein the information of the sensing measurement data required by the first sensing task comprises at least one of: a category of the sensing measurement data required by the first sensing task, precision of the sensing measurement data required by the first sensing task, a size of the sensing measurement data required by the first sensing task.

106. The second network device of claim 98-105, wherein when the response message for the fourth message indicates that the second device does not authorize the first sensing task, the response message for the fourth message carries a rejection cause of the second device.

107. The second network device of claim 83-97, further comprising:
a second processing unit, configured to: obtain a subscription message of a second device, wherein the second device is one of the one or more electronic devices within the target sensing area; and determine, based on the subscription message of the second device, whether the second device authorizes the first sensing task.

108. A second network device, comprising:
a second communication unit, configured to: send a fifth message to a third device, wherein the fifth message is used to request the third device to authorize a first sensing task; and receive from the third device a response message for the fifth message, wherein the response message for the fifth message indicates whether the third device authorizes the first sensing task.

109. The second network device of claim 108, further comprising:
a second processing unit, configured to select the third device for executing the first sensing task, based on a sensing mode of the first sensing task and a target sensing area of the first sensing task.

110. The second network device of claim 108, further comprising:
a second processing unit, configured to: determine sensing measurement data required by the first sensing task; and select, based on the sensing measurement data required by the first sensing task, the third device that satisfies a preset condition, wherein the preset condition comprises: sensing measurement data obtained by executing a second sensing task can be reused by the first sensing task.

111. The second network device of claim 110, wherein the fifth message is used to request the third device to authorize the first sensing task to reuse the sensing measurement data obtained by executing the second sensing task;
the second processing unit is configured to: when the response message for the fifth message indicates that the third device authorizes the first sensing task to reuse the sensing measurement data obtained by executing the second sensing task, obtain a sensing result of the first sensing task based on the sensing measurement data obtained by the third device executing the second sensing task, and send, through the second communication unit, the sensing result of the first sensing task to the receiver designated by the sensing request.

112. The second network device of claim 108-111, wherein the fifth message carries at least one of the following: identity information of the third device, identity of the first sensing task, content of the first sensing task, identity information of an initiator of the first sensing task, identity information of a receiver designated by the sensing request, information of a sensing mode of the first sensing task, information of the sensing measurement data required by the first sensing task.

113. The second network device of claim 112, wherein the content of the first sensing task comprises at least one of: a type of the first sensing task, requirement of the first sensing task, an execution device of the first sensing task.

114. The second network device of claim 112, wherein the information of the sensing mode comprises at least one of: a mode of sensing executed by an access network device, a mode of sensing executed by a terminal device, a mode of sensing collaboratively executed by an access network device and a terminal device, the third device as a sender of a sensing signal, the third device as a receiver of the sensing signal.

115. The second network device of claim 112, wherein the information of the sensing measurement data required by the first sensing task comprises at least one of: a category of the sensing measurement data required by the first sensing task, precision of the sensing measurement data required by the first sensing task, size of the sensing measurement data required by the first sensing task.

116. The second network device of claim 108-115, wherein when the response message for the fifth message indicates that the third device does not authorize the first sensing task, the response message for the fifth message carries a rejection cause of the third device.

117. The second network device of claim 108-116, wherein the third device is a third access network device.

118. The second network device of claim 108-116, wherein the third device is a second terminal device;
the second communication unit is configured to: send the fifth message to the second terminal device via a fourth access network device, wherein the fourth access network device serves the second terminal device; and receive the response message for the fifth message from the second terminal device via the fourth access network device.

119. The second network device of claim 108-118, wherein the second network device is a second core network device with a sensing capability.

120. A third device, comprising:
a third communication unit, configured to: receive a fifth message from a second network device, wherein the fifth message is used to request the third device to authorize a first sensing task; and send a response message for the fifth message to a second network device, wherein the response message for the fifth message indicates whether the third device authorizes the first sensing task.

121. The third device of claim 120, wherein the fifth message carries at least one of the following: identity information of the third device, identity of the first sensing task, content of the first sensing task, identity information of an initiator of the first sensing task, identity information of a receiver designated by the sensing request, information of a sensing mode of the first sensing task, information of sensing measurement data required by the first sensing task.

122. The third device of claim 121, wherein the content of the first sensing task comprises at least one of: a type of the first sensing task, requirement of the first sensing task, an execution device of the first sensing task.

123. The third device of claim 121, wherein the information of the sensing mode comprises at least one of: a mode of sensing executed by an access network device, a mode of sensing executed by a terminal device, a mode of sensing collaboratively executed by an access network device and a terminal device, the third device as a sender of a sensing signal, the third device as a receiver of the sensing signal.

124. The third device of claim 121, wherein the information of the sensing measurement data required by the first sensing task comprises at least one of: a category of the sensing measurement data required by the first sensing task, precision of the sensing measurement data required by the first sensing task, size of the sensing measurement data required by the first sensing task.

125. The third device of claim 120-124, wherein when the response message for the fifth message indicates that the third device does not authorize the first sensing task, the response message for the fifth message carries a rejection cause of the third device.

126. The third device of claim 120-125, wherein the third device is a third access network device or a second terminal device, and the second network device is a second core network device with a sensing capability.

127. A first network device, comprising: a transceiver, a processor, and a memory, the memory being configured to store a computer program, the processor being configured to invoke and execute the computer program stored in the memory, to enable the first network device to perform the method of any one of claims 1 to 19.

128. A second network device, comprising: a transceiver, a processor, and a memory, the memory being configured to store a computer program, the processor being configured to invoke and execute the computer program stored in the memory, to enable the second network device to perform the method of any one of claims 20 to 44 or the method of any one of claims 45 to 56.

129. A third device, comprising: a transceiver, a processor, and a memory, the memory being configured to store a computer program, the processor being configured to invoke and execute the computer program stored in the memory, to enable the third device to perform the method of any one of claims 57 to 63.

130. A chip, comprising: a processor, configured to invoke and execute a computer program from a memory, to make a device equipped with the chip perform the method of any one of claims 1 to 19, or the method of any one of claims 20 to 44, or the method of any one of claims 45 to 56, or the method of any one of claims 57 to 63.

131. A computer-readable storage medium, configured to store a computer program which, when executed by a device, cause the device to perform the method of any one of claims 1 to 19, or the method of any one of claims 20 to 44, or the method of any one of claims 45 to 56, or the method of any one of claims 57 to 63.

132. A computer program product, comprising a computer program instruction which, when executed, causes a computer to perform the method of any one of claims 1 to 19, or the method of any one of claims 20 to 44, or the method of any one of claims 45 to 56, or the method of any one of claims 57 to 63.

133. A computer program, cause a computer to perform the method of any one of claims 1 to 19, or the method of any one of claims 20 to 44, or the method of any one of claims 45 to 56, or the method of any one of claims 57 to 63.
